# EUROPÄISCHE PATENTSCHRIFT

(11) **EP 3 721 014 B1**
(45) Veröffentlichungstag und Bekanntmachung des Hinweises auf die Patenterteilung: **12.06.2024**
(21) Anmeldenummer: 18825873.5
(22) Anmeldetag: 03.12.2018
(51) Int. Cl.: E01H 10/00, E01C 19/21

(54) **STREUVORRICHTUNG FÜR STREUFAHRZEUGE**
SPREADING DEVICE FOR SPREADING VEHICLES
ARRANGEMENT D'ÉPANDAGE POUR VÉHICULES D'ÉPANDAGE

(30) Priorität: 05.12.2017 DE 202017107399 U
(43) Veröffentlichungstag der Anmeldung: 14.10.2020
(73) Patentinhaber: Gmeiner GmbH, 92533 Wernberg-Köblitz (DE)
(72) Erfinder: WALLNER, Johannes, 92714 Pleystein (DE)
(74) Vertreter: Glück Kritzenberger Patentanwälte PartGmbB
(86) Internationale Anmeldenummer: PCT/EP2018/083279
(87) Internationale Veröffentlichungsnummer: WO 2019/110471

(56) Entgegenhaltungen:
- EP-A1- 0 635 196
- DE-A1- 1 457 818
- DE-U1-202017 101 056
- GB-A- 2 064 283
- KR-A- 20040 018 671

## Beschreibung

### Technisches Gebiet

Die Erfindung bezieht sich auf eine Streuvorrichtung für Streufahrzeuge.

### Stand der Technik

Streuvorrichtungen bzw. Streugeräte, sind dem Fachmann hinreichend bekannt und werden auch als Streuautomaten bezeichnet. Beispielsweise sind solche Streuvorrichtungen als Winterdienst-Streugeräte ausgebildet, können jedoch auch für andere Anwendungen, beispielsweise zum Ausbringen von Reinigungsmitteln, Dünge- oder Pflanzenschutzmitteln oder dergleichen verwendet werden. Die Streuvorrichtungen der genannten Art sind entweder als sogenannte Aufsatzgeräte auf der Ladefläche eines Trägerfahrzeuges aufgesetzt montiert, oder fester Bestandteil bzw. Baugruppe eines Streufahrzeuges, beispielsweise eines Winterdienstfahrzeuges. Bei dem Winterdienstfahrzeug kann es sich insbesondere um ein Winterdienstfahrzeug für den kommunalen Räum- und Streueinsatz handeln, beispielsweise einen Lastkraftwagen.

Das Streuen im Rahmen des Winterdienstes aber auch das Streuen von Dünge- oder Pflanzenschutzmitteln kann durch Ausbringung von festen und/oder flüssigen Streumitteln oder Streustoffen erfolgen, so dass derartige Streuvorrichtungen insbesondere zur Ausbringung von auszustreuenden festen und/oder flüssigen Streustoffen ausgebildet sind. Insbesondere im Winterdienst erfolgt das Ausbringen fester Streustoffe auf den Verkehrsflächen z.B. über Streugutvorratsbehälter, die die festen Streustoffe, insbesondere das Streusalz, über eine Rutsche einem rotierenden Streuteller zuführen, von dessen Rand aus das Streugut radial nach außen abgeschleudert, also ausgestreut wird. Bedingt durch die variablen Fahrgeschwindigkeiten der Trägerfahrzeuge und Streudichten, aber auch je nach Zustand der Oberflächen von Verkehrsflächen lässt sich dabei ein gleichbleibendes Streubild rein mit festen Streustoffen nur schwerlich erreichen.

Feste Streumittel im Winterdienst werden in der neueren Zeit daher überwiegend als so genanntes Feuchtsalz ausgestreut. Bei dieser Feuchtsalzstreuung wird das Salz beim bzw. unmittelbar vor dem Ausstreuen mit einer Flüssigkeit angefeuchtet, so dass das Streusalz und die Flüssigkeit gemeinsam ausgestreut werden. Die Flüssigkeit ist üblicherweise eine Salzlösung, eine so genannte Sole, die dem auszustreuenden Salz auf der Ausbringeinrichtung oder auf dem Weg zur Ausbringeinrichtung zugemischt wird. Bei der Ausbringeinrichtung handelt es sich üblicherweise um einen rotierenden Streuteller. Das trockene Salz wird beispielsweise in konventioneller Weise mit Sole auf dem Streuteller oder kurz vor dem Auftreffen auf dem Streuteller besprüht. In der Regel wird dabei ein so genanntes FS30 Feuchtsalz ausgebracht, welches einen Solegehalt von 30% und einen entsprechenden Trockensalzgehalt von 70% aufweist.

Die durch Streuvorrichtungen erzielbaren Streubilder sind unter anderem abhängig von dem verwendeten Feuchtsalz und unterliegen einer Zertifizierung und Zulassung durch die Bundesanstalt für Straßenwesen (BAST). Insbesondere besteht bei eingesetzten Streugeräten im Winterdienst meist eine Zertifizierung für Feuchtsalz mit 30% Soleanteil (FS 30). Bei einer Erhöhung des Soleanteils ändern sich bei gattungsgemäßen Streugeräten dementsprechend auch die Streubilder und Streulagen, so dass hierdurch eine erlangte Zertifizierung erlischt.

In der Praxis hat sich jedoch gezeigt, dass die Erhöhung des Soleanteils sowie die gleichzeitige Verringerung des Trockensalzes das Streubild äußerst günstig beeinflusst. So kann darüber eine verbesserte Querverteilung über die gesamte Streubreite beobachtet werden. Weiter vorteilhaft ist eine schneller einsetzende Tauwirkung bei der Verwendung eines höheren Solegehalts zu beobachten, da gelöstes Salz allgemein schneller zu einem Tauerfolg führt als trockenes Salz. Daher gibt es Bestrebungen, den Soleanteil im Streugut zu erhöhen, beziehungsweise ein "Flüssigstreuen", nämlich die Ausbringung rein flüssiger Streumittel, zu forcieren.

Beispielsweise ist aus der DE 20 2017 101 056 U1 ein Streugerät bekannt, mit dem Feuchtsalz und flüssige Streustoffe über Streuteller ausgestreut werden, so dass das ausgebrachte Streugut einen deutlich höheren Soleanteil aufweist. Unabhängig davon, ob die ausgebrachte Sole in einem Feuchtsalz vermischt ist oder direkt als Sole verwendet wird, erfolgt die Ausbringung der Sole gemäß dem Streugerät der DE 20 2017 101 056 U1 über Streuteller, wodurch insbesondere die erzielbare Wurfweite bei einem gewünschten Streubild begrenzt ist, so dass ein Bedarf besteht die Wurfweite für flüssige Streumittel unter Beibehaltung eines optimalen Streubildes zu erhöhen.

Weiterhin offenbart die Druckschrift KR 10 2004 0 018 671 A eine Streuvorrichtung zum Ausbringen flüssiger und fester Streumittel. Die Vorrichtung umfasst einen Streuteller zur Verteilung der festen Streumittel und eine Düsenanordnung zur Verteilung des flüssigen Streumittels. Bei der Düsenanordnung sind an einem Umfang eines rotierend ausgebildeten, zylindrischen Grundkörpers mehrere, sich im Wesentlichen radial nach außen erstreckende Düsen vorgesehen, durch die das flüssige Streumittel bei Rotation des Grundkörpers versprüht wird. Die Düsen sind bezogen auf ihre radiale Länge an den Radius des Streutellers angepasst, so dass beim Streuvorgang das feste und flüssige Streumittel möglichst effizient vermischt und mit etwa gleicher Wurfweite ausgebracht werden. Nachteilig ist bei der Streuvorrichtung der KR 10 2004 0 018 671 A eine fest vorgegebene, unveränderliche Wurfweite und damit einhergehend ein unveränderliches Streubild festgelegt.

### Darstellung der Erfindung

Aufgabe der vorliegenden Erfindung ist es daher eine Streuvorrichtung für Streufahrzeuge zum Ausbringen von flüssigen Streumitteln zur Verfügung zu stellen, die die Nachteile des Standes der Technik überwindet und mit der die Ausbringung der flüssigen Streumittel bei einer großen Wurfweite optimal auf den entsprechenden Bedarf angepasst und das Streubild auf vorgegebene Verhältnisse abgestimmt werden kann. Diese Aufgabe wird erfindungsgemäß durch die Vorrichtung gemäß unabhängigem Anspruch 1 sowie durch die Ausbringeinrichtung gemäß Anspruch 20 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt eine Ausbringeinrichtung für eine Streuvorrichtung bei einem Streufahrzeug zum Ausbringen von Streumitteln zur Verfügung. Die Ausbringeinrichtung weist wenigstens einen Grundkörper und eine fest mit dem Grundkörper verbundene Abdeckung auf. Der Grundkörper definiert dabei einen Aufnahmeraum für das zugeführte flüssige Streumittel und ist im Wesentlichen in Form eines Zylinders ausgebildet, wobei der Grundkörper wenigstens einen eine Unterseite der Ausbringeinrichtung bildenden Bodenabschnitt mit einer Einlassöffnung sowie zumindest einen von dem Bodenabschnitt aufragenden und eine Rotationsachse konzentrisch umlaufenden Wandungsabschnitt aufweist. Die Ausbringeinrichtung
weist mehrere Ausströmeinheiten mit jeweils einer Ausströmmündung zur Abgabe des flüssigen Streumittels aus dem Aufnahmeraum auf, wobei die Ausströmeinheiten im Bereich des Wandungsabschnittes des Grundkörpers angeordnet sind und mit im Wandungsabschnitt ferner vorgesehenen Auslassöffnungen zusammenwirken. Die Streuvorrichtung zeichnet sich insbesondere dadurch aus, dass die Ausbringeinrichtung derart eingerichtet ist, dass das flüssige Streumittel aufgrund der bei Rotation um die Rotationsachse auftretenden Zentrifugalkraft durch die Ausströmeinheiten strahlartig aus dem Aufnahmeraum nach außen abgegeben wird und dass die Ausströmeinheiten variabel verstellbar ausgebildet sind, und zwar derart, dass eine Richtung des Strahls des austretenden flüssigen Streumittels an der Ausströmmündung eingestellt werden kann.

Unter einem flüssigen Streumittel ist vorliegend beispielsweise eine für den Winterdienst geeignete Salzlösung mit einer vorgegebenen Salzkonzentration zu verstehen, wobei es sich bei den gelösten Salzen hauptsächlich um Natriumchlorid (NaCl) aber auch um Calciumchlorid (CaCl₂) oder Magnesiumchlorid (MgCl₂), insbesondere auch um Mischungen der genannten Salze handeln kann. Eine derartige Salzlösung wird auch als Sole bezeichnet. Beispielsweise handelt es sich bei der Sole um eine im Winterdienst bevorzugt verwendete Sole mit einem Natriumchlorid-Gehalt von 22%. Das flüssige Streumittel kann vorliegend auch als flüssiger Streustoff oder als Streusole bezeichnet werden. Das Ausbringen von flüssigen Streumitteln wird gemäß dem vorliegenden Verständnis als Flüssigstreuung oder Solestreuung bzw. als Soleauswurf oder auch als Abschleudern der Sole verstanden.

Ein flüssiges Streumittel kann nach dem vorliegenden Verständnis jedoch auch eine beliebige Flüssigkeit, beispielsweise eine flüssige Zusammensetzung bzw. Lösung oder auch lediglich Wasser sein. Beispiele einer flüssigen Zusammensetzung bzw. Lösung stellen in Wasser gelöste Feststoffe, flüssige Dünge- oder Pflanzenschutzmittel oder Reinigungsmittel dar.

Besonders vorteilhaft kann mit der vorliegenden Streuvorrichtung eine reine Flüssigstreuung, nämlich ein Ausbringen von flüssigen Streumittel, insbesondere Sole mit einer besonders großen Wurfweite und mit einem anpassbaren Streumuster bzw. Streubild erfolgen. Die vorliegende Streuvorrichtung ermöglicht dabei ein flächendeckendes Streubild bzw. Sprühbild, und zwar mit einer vollflächigen, gleichmäßigen Streumittelverteilung bis in die empfindlichen Rand- oder Außenbereiche. Die Verteilung ist dabei im Vergleich zu herkömmlichen Sprühsystemen, wie beispielsweise bekannten Sprühbalken, weitaus windunempfindlicher, so dass das Streumittel insbesondere auch im äußeren Streu-oder Sprühbereich, nämlich beispielsweise in den Randbereichen einer Fahrbahn, sicher und zuverlässig mit gleichmäßiger, flächendeckender und gründlicher Verteilung ausgebracht werden kann. Aufgrund dieses vorteilhaft möglichen flächendeckenden Streubilds bzw. Sprühbilds werden mit der vorliegenden Streuvorrichtung die im Bereich des Winterdienstes geltenden Vorschriften und Anforderungen erfüllt. Beispielsweise werden mit der vorliegenden Streuvorrichtung die in der Norm DIN EN 15597-2:2010-02 "Winterdienstausrüstung - Streumaschinen - Teil 2: Allgemeine Anforderungen und Angaben für Streumaschinen", vorgeschriebenen Bestimmungen eingehalten. Die eingangs erwähnte Zertifizierung und Zulassung durch die Bundesanstalt für Straßenwesen (BAST) kann daher für die vorliegende Streuvorrichtung speziell bei einem deutlich erhöhten Soleanteil oder insbesondere für die reine Flüssigstreuung erlangt werden.

Die erfindungsgemäße Ausbringeinrichtung umfasst einen Grundkörper, der einen Aufnahmeraum für das zugeführte flüssige Streumittel, insbesondere für die zugeführte Sole bildet. Dieser Aufnahmeraum stellt quasi einen begrenzten Vorrat bzw. einen Vorratsbehälter für eine vorgegebene Menge des in Bewegung zu bringenden Streumittels, insbesondere Sole dar, wobei das flüssige Streumittel mittels der Zuführeinheit kontinuierlich aus dem Tank in den Aufnahmeraum nachgeliefert werden kann. Das in dem Aufnahmeraum befindliche flüssige Streumittel wird schließlich aufgrund der Rotation des Grundkörpers in Bewegung gesetzt. Der Grundkörper kann als trommelartiger Grundkörper, bzw. als trommelartiger, rotierender Grundkörper verstanden werden, wobei der Aufnahmeraum durch den Trommelinnenraum gebildet ist. Der Grundkörper ist dabei in Form eines Zylinders ausgebildet, insbesondere in Form eines senkrechten oder geraden Kreiszylinders mit einer durch den Bodenabschnitt gebildeten kreisrunden Grundfläche und einer durch den Wandungsabschnitt gebildeten Mantelfläche. Es ist jedoch auch denkbar, dass der Grundkörper im Wesentlichen die Form eines Zylinderabschnittes aufweist. Vorzugsweise ist der Grundkörper aus einem hochverschleißfesten Kunststoff gefertigt.

Zur Rotation der Ausbringeinrichtung ist diese wirksam mit einem Antrieb bzw. Motor verbunden. Dazu ist die Abdeckung, welche eine Oberseite der Ausbringeinrichtung bildet, sowohl fest mit dem Grundkörper verbunden als auch an den Antrieb gekoppelt. Die Abdeckung kann beispielsweise auch zugleich ein rotierender Teil des Antriebs bzw. des Motors selbst sein, sodass in einer solchen Ausführung der Grundkörper direkt an dem Motor befestigt bzw. angedockt ist.

Durch die Rotation der Ausbringeinrichtung wirkt eine entsprechende, von der eingestellten Rotationsgeschwindigkeit abhängige Zentrifugalkraft bzw. Fliehkraft auf das in den Aufnahmeraum zugeführte und dort befindliche flüssige Streumittel, insbesondere die Sole, so dass die Sole der Zentrifugalkraft folgend, nämlich ausgehend von der Rotationsachse radial nach außen gerichtet, über die Ausströmeinheiten nach außen abgegeben oder abgeschleudert wird. Die Abgabe des flüssigen Streumittels, insbesondere der Sole erfolgt somit aufgrund des in dem Aufnahmeraum des rotierenden Grundkörpers erzeugten Flüssigkeitsdrucks in Abhängigkeit von der Menge des dort vorliegenden Streumittels und der Rotationsgeschwindigkeit.

Besonders vorteilhaft wird das flüssige Streumittel bzw. die Sole bei der Abgabe aus den Ausströmeinheiten, nämlich beim Austritt aus den Ausströmeinheiten gebündelt, so dass das flüssige Streumittel die Ausbringeinrichtung strahlartig in einem Abgabestrahl verlässt, wodurch einer unerwünschten und störenden Vernebelung oder einer Bildung feinster Tröpfchen bzw. einer Aerosolbildung effektiv entgegengewirkt wird. Der Strahl des an der Ausströmmündung austretenden flüssigen Streumittels, nämlich der Abgabestrahl, weist dabei an der Ausströmmündung, und zwar direkt beim Austreten aus der Ausströmmündung unmittelbar am Austritt bzw. an der Austrittsöffnung eine der Einstellung der Ausströmeinheiten entsprechende Richtung auf. Diese Richtung kann als Ausströmrichtung oder unmittelbare Ausströmrichtung des Strahls verstanden werden und kann durch die variable Verstellung der Ausströmeinheiten verändert bzw. ausgerichtet werden.

Durch die strahlenförmige Ausgabe des Streumittels, insbesondere durch die Ausgabe in Form eines Strahls aus Soletropfen, vorzugsweise aus großen Soletropfen, können, verglichen zu feinsten Soletröpfchen wie sie bei herkömmlichen Sprühsystemen oder -vorrichtungen abgegeben werden, Wehverluste und Verwirbelungen minimiert werden. Außerdem kann aufgrund der großen Soletropfen die gleichmäßige, vollflächige Ausbringung bis in den Randbereich des Streubilds und damit bis an den Fahrbahnrand bewirkt werden, wodurch der behinderungsfreie Verkehrslauf unterstützt wird. Auch die Ausbringhöhe oder Streuhöhe kann dabei entsprechend gewählt werden, so dass der laufende Verkehr auf Fahrbahnen dadurch sehr viel weniger beeinträchtigt wird. Durch die Verstellbarkeit der Ausströmeinheiten kann auch eine Anpassung des Streubilds an die Breite der zu behandelnden Fahrbahn erfolgen.

Besondere Vorteile ergeben sich, wenn die Ausströmeinheiten zusätzlich anbringbare oder integrierbare bzw. integrierte Düsenelemente oder Auslassdüsen aufweisen, welche beispielsweise im Bereich der Auslassöffnung oder Auslassmündung der Ausströmeinheiten angeordnet sein können. Durch solche integrierten bzw. in den Strömungsweg eingebaute oder an die Auslassmündung anschließend angeordnete Düsenelemente kann beispielsweise der Strömungsweg oder auch eine Strahlform und/oder die Ausströmgeschwindigkeit des ausströmenden flüssigen Streumittels zusätzlich beeinflusst werden. So können verschiedene Auslassdüsen mit unterschiedlichen Düseneigenschaften Verwendung finden, wobei beispielsweise je nach Düseneigenschaften ein Strahldurchmesser oder ein Ausströmdruck oder die Ausströmgeschwindigkeit des ausströmenden flüssigen Streumittels variiert werden kann. Derartige zusätzlich anbringbare oder integrierbare bzw. integrierte Düsenelemente oder Auslassdüsen können auch als Einsetzdüsen oder Einsteckdüsen oder auch als Minidüsen verstanden werden.

Wie oberhalb bereits erwähnt, kann durch die variabel verstellbaren Ausströmeinheiten mit deren Verstellung die Richtung des Abgabestrahls an der Austrittsöffnung der Ausströmeinheiten, nämlich unmittelbar bzw. direkt an der Ausströmmündung beeinflusst bzw. manipuliert werden. In anderen Worten ausgedrückt kann der Strahl des austretenden flüssigen Streumittels unmittelbar am Austritt aus der Ausbringeinrichtung in gewünschter Weise orientiert bzw. gerichtet werden. Nach erfolgter gewünschter Einstellung kann auch eine Fixierung der Ausströmeinheiten in einer ausgewählten, optimalen Ausrichtung bzw. Einstellung vorgenommen werden. Beispielsweise weicht die Richtung des ausgegebenen Streumittelstrahls von der radialen Orientierung ab und das Streumittel wird von dem Grundkörper in einem vorgegebenen Winkel relativ zur radialen Richtung abgestrahlt. Um besonders hohe Wurfweiten zu erzielen, können die Ausströmeinheiten vorteilhaft insbesondere so eingestellt werden, dass die jeweiligen Ausströmmündungen in einen der Drehrichtung des Grundkörpers entgegengesetzte Richtung weisen, so dass der Abgabestrahl unmittelbar am Austrittspunkt aus der Ausströmmündung eine entgegen der Drehrichtung orientierte Richtung aufweist.

Insbesondere sind Wurfweite sowie Streubild einstellbar, indem einerseits die Rotationsgeschwindigkeit der Ausbringeinrichtung sowie andererseits die Verstellung der Ausströmeinheiten variabel gewählt und aufeinander abgestimmt werden können. Beispielsweise kann die Rotationsgeschwindigkeit so eingestellt werden, dass die Ausbringeinrichtung mit einer Drehzahl in einem Bereich von 10 bis 500 Umdrehungen pro Minute, vorzugsweise in einem Bereich von 50 bis 400 Umdrehungen pro Minute, besonders bevorzugt in einem Bereich von 150 bis 350 Umdrehungen pro Minute rotiert. Bei entsprechend eingestellter Rotationsgeschwindigkeit und bei dazu passender Einstellung der Ausströmeinheiten sind vorteilhaft Wurfweiten von mehr als 10 m, insbesondere Wurfweiten von bis zu 13 m erreichbar. Insbesondere kann die Verteilung des flüssigen Streumittels und die Wurfweite auch über die oberhalb genannten Auslassdüsen bzw. integrierten Düsenelemente optimal beeinflusst werden.

Ein besonders gleichmäßiges Streubild sowie eine gleichmäßige Verteilung des Streumittels kann dadurch erreicht werden, dass bevorzugt die variabel verstellbaren Ausströmeinheiten voneinander beabstandet und gleichmäßig über einen Umfang des Wandungsabschnittes verteilt angeordnet sind. Die Anzahl der über den Umfang des Grundkörpers verteilten Ausströmeinheiten kann je nach Durchmesser des Grundkörpers unterschiedlich sein und kann beispielsweise in einem Bereich von fünf bis zwölf Ausströmeinheiten je Grundkörper, bevorzugt zwischen sechs und zehn Ausströmeinheiten je Grundkörper, besonders bevorzugt bei acht Ausströmeinheiten je Grundkörper liegen.

Gemäß einer bevorzugten Ausführungsform der Erfindung ist jede Ausströmeinheit wenigstens in einer vertikalen Richtung verstellbar, derart dass ein die Ausströmmündung tragendes freies Ende der Ausströmeinheit in vertikaler Richtung ausgelenkt werden kann. Alternativ oder additiv ist jede Ausströmeinheit wenigstens in einer horizontalen Richtung verstellbar, derart dass das die Ausströmmündung tragende freie Ende der Ausströmeinheit in horizontaler Richtung ausgelenkt werden kann. Bei einer bevorzugten Auslenkung des die Ausströmmündung tragenden freien Endes in vertikaler Richtung nach oben tritt das Streumittel an der Ausströmmündung in einer entsprechenden Ausströmrichtung aus, die von einer horizontalen Orientierung abweicht und leicht schräg nach oben gerichtet ist. Beispielsweise schließt die Ausströmrichtung des austretenden Streumittels bei einer solchen nach oben weisenden Einstellung der Ausströmeinheiten einen spitzen Winkel mit einer horizontalen, parallel zum Bodenabschnitt des Grundkörpers verlaufenden Ebene ein. Wird das die Ausströmmündung tragende freie Ende in horizontaler Richtung ausgelenkt, kann die Ausströmmündung derart verschwenkt werden, dass die Ausströmrichtung des austretenden Streumittels von einer radialen Orientierung abweicht und beispielsweise mit einer vertikalen, die Rotationsachse aufnehmenden Ebene einen spitzen Winkel einschließt. Jede Ausströmeinheit weist eine Hauptachse auf, wobei die Ausströmeinheiten zur variablen Verstellung bevorzugt um die jeweiligen Hauptachsen drehbar sind.

Um beispielsweise eine insbesondere große Wurfweite für das Streumittel zu erreichen, werden die freien Enden der Ausströmeinheiten in vertikaler Richtung nach oben ausgelenkt und in horizontaler Richtung entgegen einer Drehrichtung der Ausbringeinrichtung verschwenkt, so dass die Ausströmmündungen in dieser bevorzugten Stellung schräg nach oben und zugleich entgegen die Drehrichtung weisen. Dadurch ergibt sich ein im Wesentlichen sichelförmiges Muster bzw. ein sichelförmiger Verlauf für die aus den Ausströmmündungen austretenden Strahlen des Streumittels, wodurch das Streubild auf eine Idealform einstellbar ist und die Wurfweite deutlich erhöht werden kann.

Gemäß einer vorteilhaften Ausführungsvariante ist jede Ausströmeinheit mehrteilig ausgebildet und umfasst wenigstens ein zur Befestigung an dem Wandungsabschnitt des Grundkörpers ausgebildetes Basisstück sowie ein gelenkig mit dem Basisstück verbundenes und die Ausströmmündung aufweisendes Kopfstück. Ganz besondere Vorteile ergeben sich dadurch, dass das Kopfstück einen Gelenkkugelabschnitt aufweist und das Basisstück eine gelenkpfannenartige Aufnahme für den Gelenkkugelabschnitt bildet. Mit einer derartigen kugelgelenkartigen Verbindung zwischen Kopfstück und Basisstück ist das Kopfstück relativ zum Basisstück vorteilhaft in beliebige Richtungen verschwenkbar.

Jede Ausströmeinheit weist eine Hauptachse auf und ist vorteilhaft derart an dem Wandungsabschnitt des Grundkörpers befestigt, dass jede Hauptachse in Bezug auf die Rotationsachse in einer radialen Orientierung angeordnet ist. Gemäß besonders bevorzugter Ausführungsvarianten können die Ausströmeinheiten auch derart ausgebildet sein, dass sie sich entlang ihrer jeweiligen Hauptachse derart über den Umfang des Grundkörpers hinaus erstrecken, dass die Ausströmmündungen in einer vorgegebenen Distanz zu dem Wandungsabschnitt des Grundkörpers angeordnet sind. Beispielsweise können die Ausströmeinheiten dazu jeweils ein Rohrstück oder einen Rohrstückabschnitt aufweisen, welcher quasi eine Verlängerung der Ausströmeinheiten in Richtung der Hauptachse bildet. So kann darüber z.B. erreicht werden, dass die Ausströmmündungen auf einem konzentrisch zu dem Wandungsabschnitt des Grundkörpers verlaufenden, größeren Kreis angeordnet sind und somit einen den Grundkörper in einem definierten Abstand kranzartig umlaufenden Kreis bilden.

Insbesondere bei mehrteilig ausgebildeten Ausströmeinheiten sind Ausführungen denkbar, bei denen das verlängernde Rohrstück oder der Rohrstückabschnitt zwischen dem Gelenkkugelabschnitt und der Ausströmmündung angeordnet ist. Alternativ kann ein derartiges Rohrstück aber auch im Anschluss an die Ausströmmündung angeordnet sein, sofern das Rohrstück selbst wiederum über eine entsprechend äquivalente Ausströmöffnung verfügt. Das verlängernde Rohrstück kann ein separates, mit dem Kopfstück verbindbares Element sein oder als Abschnitt des Kopfstückes ausgebildet sein. Ein derartiges verlängerndes Rohrstück kann zur optimalen Ausrichtung der Ausströmmündung auch als gebogenes Rohrstück ausgeführt sein. Gemäß dem Verständnis der vorliegenden Erfindung ist ein derartiges Rohrstück auch als Ausbringrohr zu verstehen.

Insbesondere bei Ausführungsformen, die auf eine gelenkige Verbindung zwischen Kopf- und Basisstück einer durch wenigstens zwei Teile gebildeten Ausströmeinheit verzichten, kann das Rohrstück oder Ausbringrohr besonders bevorzugt auch als gewinkeltes Rohrstück, nämlich als Winkelrohr mit einem sich entlang der Hauptachse erstreckenden ersten Rohrabschnitt und einem sich entlang einer Ausströmachse erstreckenden zweiten Rohrabschnitt gebildet sein. Die Ausströmmündung ist dabei an einem freien Ende des zweiten, sich entlang der Ausströmachse verlaufenden Rohrstücks angeordnet. Das Winkelrohr ist bevorzugt so ausgebildet, dass die gewinkelt zueinander orientierten Rohrabschnitte einen vorgegebenen Winkel einschließen, wobei der erste und der zweite Rohrabschnitt beispielsweise einen Winkel in einem Bereich von 115° bis 160°, vorzugsweise in einem Bereich von 120° bis 155°, bevorzugt in einem Bereich von 125° bis 150°, insbesondere bevorzugt in einem Bereich von 130° bis 145° und ganz besonders bevorzugt einen Winkel von rund 135° oder rund 140° einschließen. In anderen Worten ausgedrückt ist der zweite Rohrabschnitt relativ zum ersten Rohrabschnitt derart angestellt, dass sich die Ausströmachse und die Hauptachse in einem Winkel im Bereich von 20° bis 65°, vorzugsweise im Bereich von 25° bis 60°, bevorzugt in einem Winkel im Bereich von 30° bis 55°, besonders bevorzugt im Bereich von 35° bis 50° und insbesondere bevorzugt in einem Winkel von rund 40° oder rund 45° schneidet.

Gemäß dem vorliegenden Verständnis entspricht die Richtung des an der Ausströmmündung austretenden Strahls des flüssigen Streumittels, nämlich des Abgabestrahls, unmittelbar an der Austrittsöffnung bzw. Ausströmmündung der Orientierung der Ausströmachse.

Bei der beschriebenen Ausführungsform der Ausströmeinheiten, die ein Winkelrohr als Ausbringrohr aufweisen, ist jede Ausströmeinheit quasi auf einen bestimmten Winkel eingestellt, so dass der Abgabestrahl des flüssigen Streumittels unmittelbar an der Ausströmmündung in dem eingestellten Winkel aus dieser austritt. Ganz besonders bevorzugt sind die gewinkelt ausgebildeten Ausbringrohre dabei so an dem Wandungsabschnitt des Grundkörpers der Ausbringeinrichtung angeordnet, dass das die Ausströmmündung tragende freie Ende des sich entlang der Ausströmachse erstreckenden zweiten Rohrabschnittes entgegen die Drehrichtung des Grundkörpers weist. Besonders vorteilhaft können darüber hohe Wurfweiten oder Sprühweiten bei einem gleichzeitig insbesondere gleichmäßigen Streubild erreicht werden. Um dies zusätzlich noch zu unterstützen, können die Ausbringrohre zur variablen Verstellung der Ausströmeinheiten um die Hauptachse gedreht werden, so dass die die freien Enden der Ausbringrohre, welche die Ausströmmündungen tragen, zusätzlich in vertikaler Richtung nach oben ausgelenkt sind. Die Ausströmmündungen weisen in dieser bevorzugten Stellung schräg nach oben und zugleich entgegen die Drehrichtung. Dadurch ergibt sich ein im Wesentlichen sichelförmiges Muster bzw. ein sichelförmiger Verlauf für die aus den Ausströmmündungen austretenden Strahlen des Streumittels, wodurch das Streubild auf eine Idealform einstellbar ist und die Wurfweite deutlich erhöht werden kann. Auch die Streuhöhe kann darüber optimal eingestellt werden.

Gemäß einer besonders bevorzugten Ausführungsform der Erfindung ist ferner ein Vorratsbehälter zur Aufnahme von auszustreuenden festen Streumitteln und wenigstens eine Förder- und Beschickungseinheit zum Aufbringen der festen Streumittel auf die Oberseite der Ausbringeinrichtung vorgesehen, wobei die Streuvorrichtung zum gleichzeitigen Ausbringen von flüssigen und festen Streumitteln eingerichtet ist.

Insbesondere bevorzugt ist dabei die Abdeckung der Ausbringeinrichtung für die gleichzeitige Ausbringung von flüssigen und festen Streumitteln in Form eines Streutellers ausgebildet, wobei der Streuteller insbesondere bevorzugt einen Tellerradius aufweist, der größer ist als ein Grundkörperradius des Grundkörpers. An einem derartigen Streuteller können besonders bevorzugt an einer dem Grundkörper abgewandten oberen Seite nach oben aufragende Führungswandungen vorgesehen sein.

Bei der Ausbringeinrichtung kann zusätzlich ein in dem Aufnahmeraum des Grundkörpers angeordneter Abdeckschirm vorgesehen sein, wobei der Abdeckschirm zur innenseitigen Abschirmung wenigstens einer der Auslassöffnungen im Wandungsabschnitt ausgebildet ist. Besonders bevorzugt umfasst der Abdeckschirm dabei eine gekrümmt ausgebildete Schirmfläche, wobei die Krümmung der Schirmfläche insbesondere bevorzugt an eine Krümmung des Wandungsabschnittes angepasst ist, derart, dass die Schirmfläche in Anlage oder nahezu in Anlage an eine Innenseite des Wandungsabschnittes angeordnet sein kann. Insbesondere bevorzugt sind eine Höhe der Schirmfläche und eine Umfangslänge der Schirmfläche so gewählt, dass die Schirmfläche an den Wandungsabschnitt angepasst ist und mindestens eine Auslassöffnung vollständig verdeckt bzw. verdecken kann. Besondere Vorteile ergeben sich jedoch, wenn Höhe und Umfangslänge der Schirmfläche so gewählt sind, dass gleichzeitig mehrere Auslassöffnungen vollständig verdeckt werden bzw. verdeckt werden können.

Der Abdeckschirm ist bevorzugt in einer vorgegebenen Position fest stehend in dem Aufnahmeraum angeordnet und befestigt, derart, dass der Abdeckschirm von der Rotation des Grundkörpers entkoppelt ist und nicht mit diesem rotiert. Der Wandungsabschnitt des Grundkörpers gleitet somit an der Schirmfläche vorbei. Besondere Vorteile ergeben sich, wenn die Position des Abdeckschirmes gesteuert einstellbar ist. Beispielsweise kann die Position mit einer vorgesehenen Tellersteuerung des Streutellers eingestellt werden.

Um ein möglichst ungehindertes Aneinandergleiten des Abdeckschirmes und der Innenseite des Wandungsabschnittes des Grundkörpers sicherzustellen, ist der Abdeckschirm aus einem Material mit geringen Reibwerten hergestellt, wobei das Material gleichzeitig einem geringen Verschleiß unterliegt und hochverschleißfest ist. Vorzugsweise ist der Abdeckschirm aus Teflon gefertigt.

Da der Abdeckschirm unabhängig von der Rotation des Grundkörpers ortsfest angeordnet ist, wird/werden in Abhängigkeit von der Drehung bzw. Rotation des Grundkörpers jeweils alternierende Auslassöffnung(en) abgedeckt, so das gemäß der vorliegenden Erfindung darunter zu verstehen ist, dass jeweils die an der entsprechenden Umlaufstellung oder Drehposition "vorbeilaufende(n)" Auslassöffnung(en) abgedeckt werden.

Der Abdeckschirm bringt den besonderen Vorteil mit sich, dass durch entsprechende Positionierung bzw. Einstellung das Streubild für das auszubringende bzw. ausgebrachte Streumittel variiert werden kann und zwar insbesondere derart, dass in Richtung des Fahrzeughecks kein Streumittel ausgeworfen wird. Beispielsweise kann ein bestimmter Winkelbereich, vorzugsweise von rund 10° bis 20° "ausgespart" werden, in dem kein Auswurf von Streumittel erfolgt. Besonders vorteilhaft wird dadurch das Fahrzeug geschützt und eine üblicherweise bei Streufahrzeugen vorgesehene Spritzschutz-Vorrichtung kann entfallen.

Solche herkömmlichen Spritzschutz-Vorrichtungen, welche gewöhnlich durch vertikal vom Fahrzeugheck nach unten hängende Kunststoff- oder Gummilappen gebildet sind, haben den erheblichen Nachteil, dass sich das dort auftreffende Streumittel zunächst sammelt und bei Erreichen einer gewissen Menge unkontrolliert in Richtung zur Fahrbahn hin abrutscht. Diese in unregelmäßigen Abständen auf der Fahrbahn auftreffenden Häufungen an Streumittel gehen somit für das Streubild "verloren". Daher bringt der Abdeckschirm gemäß der bevorzugten Ausführungsform der Erfindung den weiteren Vorteil mit sich, dass Streumittel eingespart werden kann, da das gesamte ausgebrachte Streumittel für das auf der Fahrbahn zu erzeugende Streubild zur Verfügung steht.

Gemäß einer besonders bevorzugten Ausführungsform der vorliegenden Streuvorrichtung sind zwei oder mehrere Ausbringeinrichtungen vorgesehen. Beispielsweise können die zwei oder mehreren Ausbringeinrichtungen nebeneinander angeordnet sein, so dass die jeweiligen Rotationsachsen der Ausbringeinrichtungen parallel zueinander verlaufen. Dabei können die Ausbringeinrichtungen bezogen auf ein Höhenniveau, auf etwa gleicher Höhe angeordnet sein, so dass beispielsweise die jeweiligen Bodenabschnitte der Grundkörper in einer gemeinsamen horizontal verlaufenden Ebene aufgenommen sind oder sie können auf verschiedenen Höhenniveaus angeordnet sein, so dass die jeweiligen Bodenabschnitte der Grundkörper in parallel zueinander verlaufenden horizontalen Ebenen aufgenommen sind.

Alternativ können die zwei oder mehreren Ausbringeinrichtungen auch derart übereinander angeordnet sein, dass die jeweiligen Bodenabschnitte der Grundkörper in parallel zueinander verlaufenden horizontalen Ebenen aufgenommen sind und zugleich die Rotationsachsen der jeweiligen Ausbringeinrichtungen in eine gemeinsame Rotationsachse zusammenfallen. In dieser bevorzugten Anordnung sind die Ausbringeinrichtungen bezogen auf eine vertikale Orientierung fluchtend zueinander ausgerichtet.

Diese bevorzugten Ausführungsvarianten mit zwei oder mehreren nebeneinander angeordneten Ausbringeinrichtungen erreichen besonders vorteilhaft extreme Wurfweiten. Beispielsweise können für den Einsatz auf Flughäfen oder auf anderen Großflächen Streufahrzeuge mit einer solchen Ausführungsvariante eingesetzt werden, wobei am Heck des Streufahrzeuges bzw. Winterdienstfahrzeuges, und zwar rechts- und linksseitig über die Seite des Streufahrzeuges überstehend, je eine Ausbringeinrichtung angeordnet ist, so dass näherungsweise die doppelte Streu- bzw. Wurfweite erreicht werden kann. Beispielsweise sind die Ausbringeinrichtungen dazu auf vorgesehenen, geeigneten Auslegern montiert.

Auch ist es durch zwei oder mehrere Ausbringeinrichtungen vorteilhaft möglich, einen sehr großen Streustoffmengenbereich von gering bis hoch abzudecken. Beispielsweise können übereinander angeordnete Ausbringeinrichtungen zu wechselseitig schaltbaren Systemen mit jeweils kleinem und großem Durchsatz kombiniert werden. Dabei können die Ausbringeinrichtungen miteinander oder getrennt voneinander betrieben werden.

Die vorliegende Erfindung umfasst auch eine Streuvorrichtung für Streufahrzeuge zum Ausbringen von Streumitteln. Die Streuvorrichtung umfasst zumindest einen Tank zur Aufnahme von auszustreuenden flüssigen Streumitteln und wenigstens eine über eine vorgesehene Zuführeinheit mit dem Tank verbundene rotierend angetriebene Ausbringeinrichtung. Die Ausbringeinrichtung weist wenigstens einen Grundkörper und eine fest mit dem Grundkörper verbundene Abdeckung auf, wobei der Grundkörper einen Aufnahmeraum für zugeführtes flüssiges Streumittel definiert und im Wesentlichen in Form eines Zylinders ausgebildet ist, wobei der Grundkörper wenigstens einen eine Unterseite der Ausbringeinrichtung bildenden Bodenabschnitt mit einer Einlassöffnung sowie zumindest einen von dem Bodenabschnitt aufragenden und eine Rotationsachse konzentrisch umlaufenden Wandungsabschnitt aufweist, wobei die rotierend antreibbare Ausbringeinrichtung zur Abgabe des flüssigen Streumittels aus dem Aufnahmeraum mehrere Ausströmeinheiten mit jeweils einer Ausströmmündung aufweist. Die Ausströmeinheiten sind im Bereich des Wandungsabschnittes des Grundkörpers angeordnet und wirken mit im Wandungsabschnitt vorgesehenen Auslassöffnungen zusammen. Die Ausbringeinrichtung zeichnet sich insbesondere dadurch aus, dass sie derart eingerichtet ist, dass das flüssige Streumittel aufgrund einer bei Rotation um die Rotationsachse auftretenden Zentrifugalkraft durch die Ausströmeinheiten strahlartig aus dem Aufnahmeraum nach außen abgegeben wird und dass die Ausströmeinheiten variabel verstellbar ausgebildet sind, derart dass eine Richtung des Strahls des austretenden flüssigen Streumittels an der Ausströmmündung eingestellt werden kann.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1a: eine oberseitige Draufsicht auf ein Winterdienstfahrzeug mit einer montierten Streuvorrichtung gemäß einer Ausführungsform der vorliegenden Erfindung;
- Fig. 1b: in seitlicher Ansicht ein Winterdienstfahrzeug mit einer montierten Streuvorrichtung gemäß einer Ausführungsform der vorliegenden Erfindung;
- Fig. 2: eine schematische Seitenansicht einer Ausführungsform einer Ausbringeinrichtung;
- Fig. 3: eine schematische Seitenansicht einer weiteren Ausführungsform einer Ausbringeinrichtung;
- Fig. 4: schematisch dargestellt in perspektivischer Ansicht eine Ausführungsform eines Grundkörpers mit daran befestigten Ausströmeinheiten;
- Fig. 5: schematisch dargestellt in perspektivischer Ansicht den Grundkörper der Figur 4 mit zusätzlichem Abdeckschirm im Aufnahmeraum;
- Fig. 6: in einer grob schematischen Seitenansicht eine Explosionsdarstellung einer Ausführungsform einer Ausströmeinheit;
- Fig. 7: A und B: schematisch dargestellt einen Vertikalschnitt einer montierten Ausströmeinheit in verschiedenen Verstellpositionen und
C und D: in Draufsicht von oben einen Ausschnitt des Grundkörpers mit befestigter Ausströmeinheit in verschiedenen Verstellpositionen;
- Fig. 8: schematisch dargestellt in perspektivischer Ansicht eine alternative Ausführungsform eines Grundkörpers mit daran befestigten Ausströmeinheiten und
- Fig. 9: A: schematisch dargestellt einen Vertikalschnitt einer Ausströmeinheit der Figur 8 und
B: in Draufsicht von oben einen Ausschnitt des Grundkörpers mit befestigter Ausströmeinheit gemäß Figur 8.

### Wege zur Ausführung der Erfindung

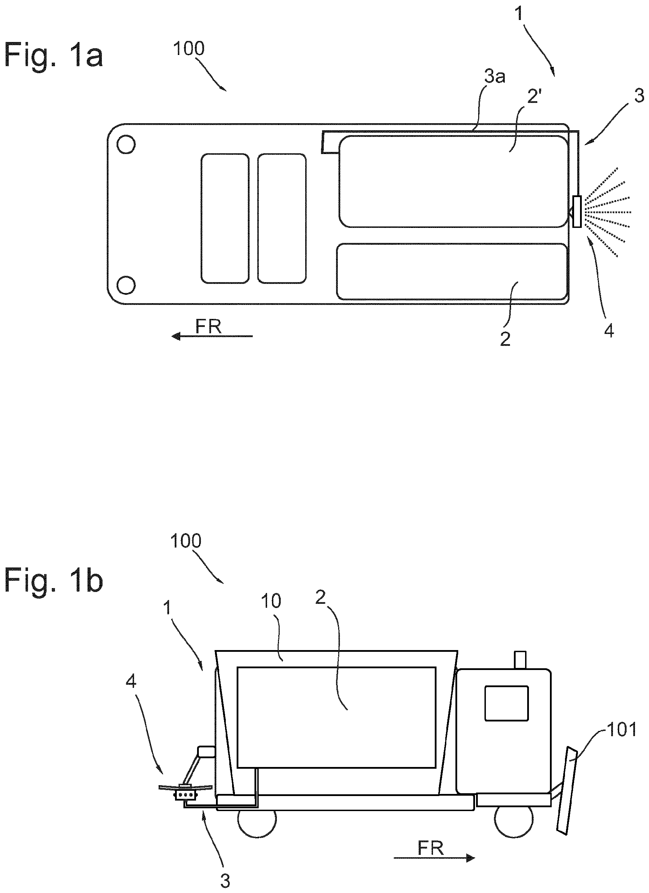

In den Figuren 1a und 1b ist jeweils ein Winterdienstfahrzeug 100 mit je einer beispielhaften Ausführungsvariante einer erfindungsgemäßen Streuvorrichtung 1 zum Ausstreuen von Streumitteln dargestellt, wobei die Streuvorrichtung 1 insbesondere dazu eingerichtet ist, auf ein herkömmliches Trägerfahrzeug aufgebaut zu werden. Das Winterdienstfahrzeug 100 der Figur 1a ist in einer oberseitigen Draufsicht und dasjenige der Figur 1b in einer seitlichen Ansicht da rgestellt.

Der Aufbau derartiger Winterdienstfahrzeuge 100 ist hinlänglich aus dem Stand der Technik bekannt. Beispielweise kann das Winterdienstfahrzeug 100 als herkömmlicher Lastkraftwagen ausgebildet sein und insbesondere eine Lade-oder Tragfläche sowie ein Führerhaus umfassen. Am Winterdienstfahrzeug 100 kann zusätzlich ein Schneepflug 101 vorgesehen sein, der beispielsweise frontal als Frontschneepflug oder seitlich als Seitenschneepflug ausgebildet ist. In dem in Figur 1b dargestellten Beispiel ist ein Frontschneepflug 101 vorderseitig angeordnet, der bei Fortbewegung des Winterdienstfahrzeuges 100 in Fahrtrichtung FR den vor dem Winterdienstfahrzeug 100 liegenden Schnee von der Fahrbahn entfernen kann.

Die Streuvorrichtung 1 ist in dem in Figur 1a dargestellten Beispiel zur Ausbringung von flüssigen Streumitteln und in dem in Figur 1b dargestellten Beispiel zur gleichzeitigen Ausbringung von festen und flüssigen Streumitteln ausgebildet.

In jedem Fall umfasst die Streuvorrichtung 1 zumindest einen Tank 2, 2' zur Aufnahme von auszustreuenden flüssigen Streumitteln und wenigstens eine über eine ferner vorgesehene Zuführeinheit 3 mit dem Tank 2, 2' verbundene, rotierend angetriebene Ausbringeinrichtung 4. Der Tank 2, 2', welcher im vorliegenden Beispiel einen Soletank bildet und auch als Soletank bezeichnet wird, ist auf einem eine Tragfläche bildenden Tragrahmen des Winterdienstfahrzeuges 100 montiert. Die Ausbringeinrichtung 4 ist heckseitig, d.h. in Fahrtrichtung FR hinten, an dem Winterdienstfahrzeug 100 angeordnet.

Die Zuführeinheit 3 dient der Zuführung bzw. Leitung von Sole aus dem Soletank 2, 2' in die heckseitig angeordnete Ausbringeinrichtung 4 und verfügt dazu über eine Zuführleitung 3a, über die der Soletank 2. 2' mit der Ausbringeinrichtung 4 in fluiddichter Weise verbunden ist.

Bei dem in Figur 1b dargestellten Winterdienstfahrzeug 100 umfasst die Streuvorrichtung 1 zusätzlich einen Vorratsbehälter 10 zur Aufnahme von auszustreuenden festen Streumitteln und wenigstens eine nicht dargestellte Förder-und Beschickungseinheit zum Transportieren der festen Streumittel von dem Vorratsbehälter 10 zur Ausbringeinrichtung 4 und zum Aufbringen der festen Streumittel auf die Ausbringeinrichtung 4.

Zwar nicht in den Figuren dargestellt ist es jedoch möglich, dass die Streuvorrichtung 1 zwei oder mehrere Ausbringeinrichtungen 4 aufweist. Diese können nebeneinander oder übereinander am Winterdienstfahrzeug 100 montiert sein. Beispielsweise im Einsatz auf Flughäfen erweist sich eine Anordnung von zwei heckseitig nebeneinander am Winterdienstfahrzeug 100 montierten Ausbringeinrichtungen 4 als besonders günstig, da darüber eine größere, nämlich nahezu die doppelte Wurfweite erzielt werden kann. Um links- und rechtsseitig des Winterdienstfahrzeug 100 über eine vorgegebene Strecke über die Fahrzeugseite hinauszuragen, können die Ausbringeinrichtungen 4 beispielsweise auf vorgesehenen Auslegern montiert sein.

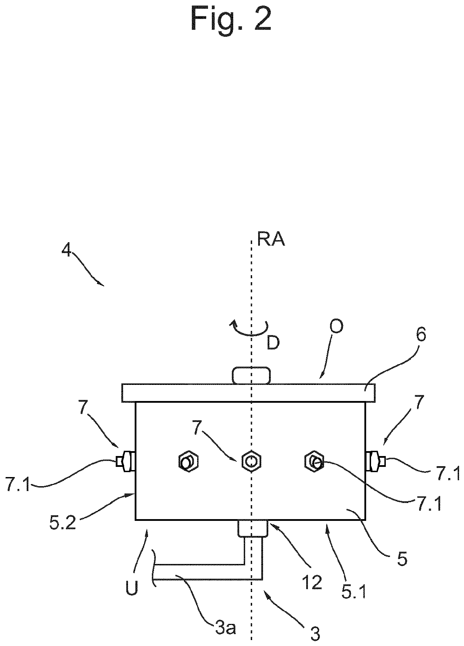

Eine beispielhafte Ausführungsform einer Ausbringeinrichtung 4 ist in Figur 2 in einer seitlichen Ansicht schematisch dargestellt, wobei die beispielhafte Ausbringeinrichtung 4 zum Ausbringen von auszustreuenden flüssigen Streumitteln, insbesondere Sole ausgebildet ist. Die Ausbringeinrichtung 4 ist um eine Rotationsachse RA rotierend angetrieben und weist einen Grundkörper 5 sowie eine fest mit dem Grundkörper 5 verbundene Abdeckung 6 auf.

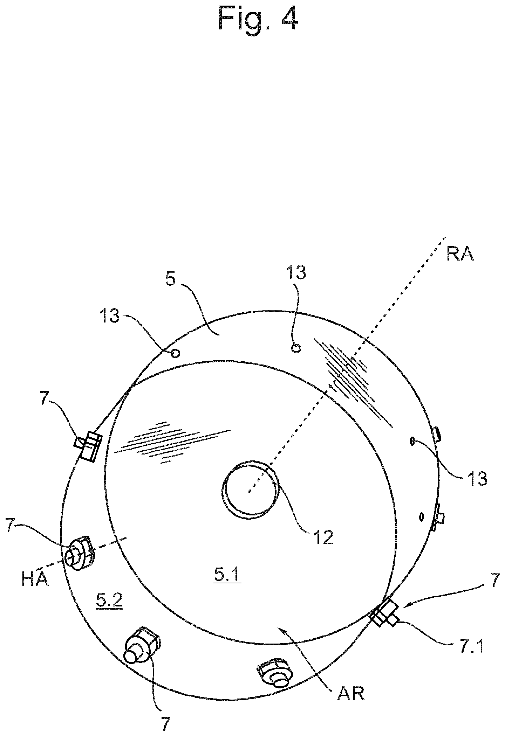

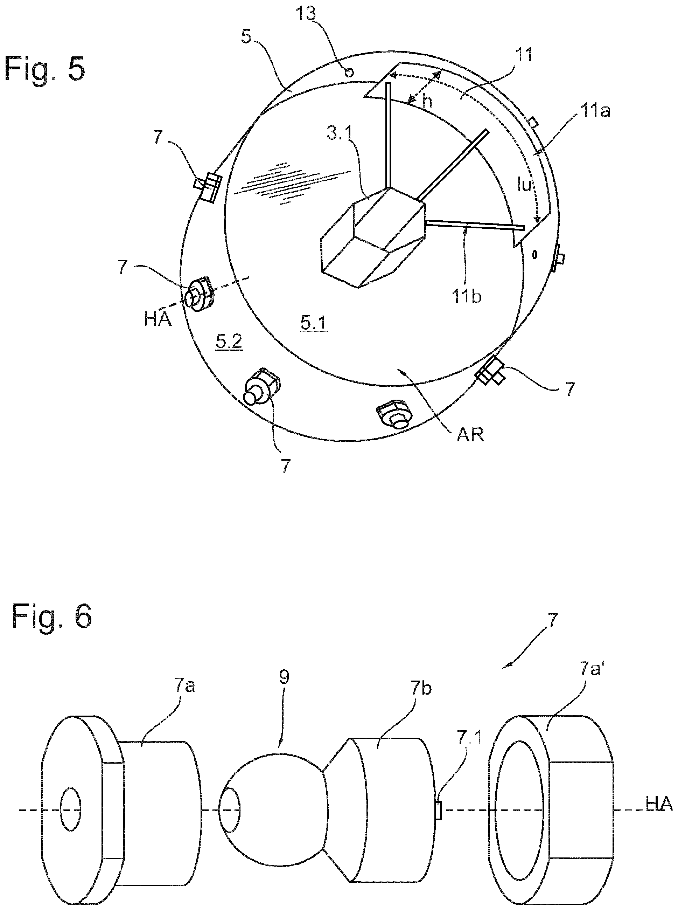

Der im Wesentlichen in Form eines Zylinders oder auch Zylinderabschnittes ausgebildete, trommelartige Grundkörper 5 weist einen eine Unterseite U der Ausbringeinrichtung 4 bildenden Bodenabschnitt 5.1 sowie einen von dem Bodenabschnitt 5.1 aufragenden und die Rotationsachse RA konzentrisch umlaufenden Wandungsabschnitt 5.2 auf. Der Grundkörper 5 definiert dabei einen in seinem Inneren ausgebildeten, vom Bodenabschnitt 5.1 und Wandabschnitt 5.2 begrenzten Aufnahmeraum AR (siehe Figuren 4 und 5) für das zugeführte flüssige Streumittel. Die Zuführung des flüssigen Streumittels in den Aufnahmeraum AR erfolgt über die Zuführeinheit 3 unterseitig an der Ausbringeinrichtung 4, wobei der Bodenabschnitt 5.1 des Grundkörpers 5 dazu eine mit der Zuführleitung 3a verbundene Einlassöffnung 12 (in Figur 2 nicht sichtbar, siehe Figur 4) aufweist.

Die Abdeckung 6 bildet eine Oberseite O der Ausbringeinrichtung 4, wobei der Grundkörper 5 mit geeigneten Befestigungsmitteln fest mit der Abdeckung verbunden 6 ist. Die Abdeckung 6 wiederum ist wirksam an einen nicht dargestellten Antrieb gekoppelt, der die Abdeckung 6 in Rotation um die Rotationsachse RA versetzt. Durch die Befestigung des Grundkörpers 5 an der Abdeckung 6 rotiert der Grundkörper 5 zusammen mit der Abdeckung 6 in derselben, von dem Antrieb vorgegebenen Rotationsgeschwindigkeit und Drehrichtung D. Die Abdeckung 5 kann zugleich ein rotierender Teil des Antriebs bzw. eines Motors sein, sodass in einer solchen Ausführungsvariante der Grundkörper 5 direkt an dem Motor befestigt bzw. angedockt ist.

Die Ausbringeinrichtung 4 ist mit mehreren variabel verstellbaren Ausströmeinheiten 7 zur Abgabe des flüssigen Streumittels aus dem Aufnahmeraum AR ausgestattet, wobei die variabel verstellbaren Ausströmeinheiten 7 im Bereich des Wandungsabschnittes 5.2 angeordnet und beabstandet zueinander über einen Umfang des Wandungsabschnittes 5.2 gleichmäßig verteilt sind. Jede Ausströmeinheit 7 wirkt dabei jeweils mit einer im Wandungsabschnitt 5.2 des Grundkörpers 5 vorgesehenen Auslassöffnung 13 (in Figur 2 nicht sichtbar, siehe Figuren 4 und 5) zusammen. Jede Ausströmeinheit 7 weist freiendseitig eine Ausströmmündung 7.1 auf. Durch die Rotation der Ausbringeinrichtung 4 um die Rotationsachse RA wird das in den Aufnahmeraum AR zugeführte und dort vorgehaltene flüssige Streumittel aufgrund der auftretenden Zentrifugalkraft durch die Ausströmeinheiten 7 aus dem Aufnahmeraum AR nach außen abgegeben. Das flüssige Streumittel tritt dabei strahlartig, gebündelt durch die jeweiligen Ausströmmündungen 7.1 aus den Ausströmeinheiten 7 aus, wobei eine ungewünschte, störende Vernebelung des flüssigen Streumittels bzw. die Bildung feinster Tröpfchen effektiv verhindert wird.

In Abhängig der Drehzahl bzw. Rotationsgeschwindigkeit der Ausbringeinrichtung 4 kann die Wurfweite bedarfsgerecht eingestellt werden. Beispielsweise kann die Rotationsgeschwindigkeit für die optimale Ausbringung der Sole einen Wert für eine Umdrehungszahl in einem Bereich von ca. 10 bis 500 Umdrehungen pro Minute betragen. Je nach Umdrehungszahl können damit besonders vorteilhaft Wurfweiten von bis zu 13 m erreicht und zugleich eine Vernebelung bzw. eine Aerosolbildung durch Feinversprühen effektiv verhindert werden.

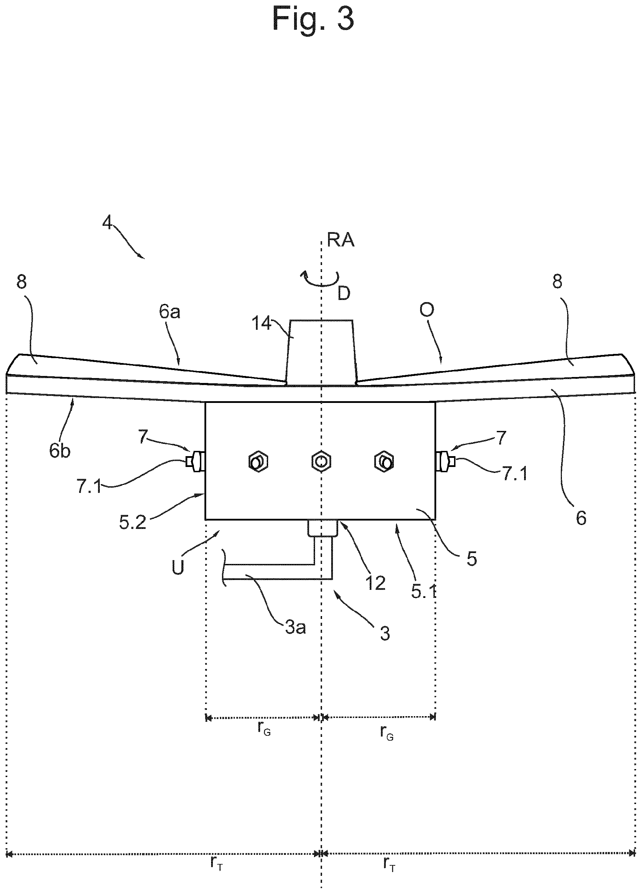

In Figur 3 ist eine weitere beispielhafte Ausführungsform einer Ausbringeinrichtung 4, dargestellt die zum gleichzeitigen Ausbringen von auszustreuenden festen und flüssigen Streumitteln ausgebildet ist. Die Ausbringeinrichtung 4 gemäß Figur 3 unterscheidet sich von der in Figur 2 dargestellten Ausführungsvariante hauptsächlich dadurch, dass die Abdeckung 6 in Form eines Streutellers ausgebildet ist. Der Streuteller 6 ist dabei wirksam an den wiederum nicht dargestellten Antrieb gekoppelt, der den Streuteller 6 in Rotation um die Rotationsachse RA versetzt. An einer unteren Seite 6b des Streutellers 6 ist der Grundkörper 5 befestigt, der zusammen mit dem Streuteller 6 um die Rotationsachse RA rotiert.

Der Streuteller 6 ist in bekannter Weise ausgeführt und ist insbesondere für das Ausbringen von festen Streumitteln, insbesondere für das Ausbringen von Feuchtsalz ausgebildet. Der Streuteller 6 weist dazu einen Tellerradius r_{T} auf, der größer ist als ein Grundkörperradius r_{G} des Grundkörpers 5. An seiner dem Grundkörper 5 abgewandten oberen Seite 6a ist der Streuteller 6 mit nach oben aufragenden Führungswandungen 8 ausgestattet, welche in Form von Wurfschaufeln ausgebildet und in radialer Richtung angeordnet sind, derart, dass sie jeweilige, zwischen den Führungswandungen 8 angeordnete, kreissektorartige Führungskanäle für das Streumittel seitlich begrenzen.

Das feste Streumittel, insbesondere Streusalz wird über eine (in den Figuren nicht dargestellte) Förder- und Beschickungseinheit auf die obere Seite 6a des Streutellers aufgebracht, wobei die Förder- und Beschickungseinheit eine Rutsche umfassen kann, die so eingerichtet ist, dass das feste Streumittel, insbesondere Streusalz auf der oberen Seite 6a mittig auf den Streuteller 6 auftrifft. Im Zentrum des Streutellers 6 kann eine Prallhaube 14 angeordnet sein, die das aus der Rutsche nach unten austretende Streusalz sammelt und radial nach außen durch die Führungskanäle richtet. Auf dem Streuteller 6 kann das feste Streumittel zusätzlich mit Sole angefeuchtet werden bzw. kann dem festen Streumittel zusätzlich Sole zugesetzt werden. Dazu kann beispielsweise von der Zuführleitung 3a der Zuführeinheit 3 über einen nicht in den Figuren dargestellten Leitungsabzweig eine Soleleitung zur oberen Seite 6a des Streutellers 6 geführt sein, die beispielsweise zusätzlich mit einer Sprühanordnung verbunden sein kann. Durch die Soleleitung bzw. durch die damit verbundene Sprühanordnung kann ein Sole-Sprühstrahl in Richtung auf das aus der Rutsche austretende Streusalz gerichtet sein, der das Streusalz während des Freifallens oder bereits im Zentrum des Streutellers 6 zusätzlich befeuchten kann. Die Sprühanordnung kann dabei feststehend oder einstellbar angeordnet sein.

Analog zu der Ausführungsvariante gemäß Figur 2 rotiert der Grundkörper 5 auch bei der in Figur 3 dargestellten Ausführungsform durch seine Befestigung am Streuteller 6 zusammen mit diesem in derselben, von dem Antrieb vorgegebenen Rotationsgeschwindigkeit und Drehrichtung D. Durch die Rotation werden dabei gleichzeitig sowohl das feste Streugut, z. B. das Feuchtsalz wie auch das flüssige Streugut, beispielsweise die Sole ausgebracht. Je nach Umdrehungszahl können damit besonders vorteilhaft sowohl für das feste Streumittel als auch für die Sole Wurfweiten von bis zu 13 m erreicht und zugleich eine Vernebelung bzw. eine Aerosolbildung durch Feinversprühen effektiv verhindert werden.

In den Figuren 4 und 5 ist jeweils in perspektivischer Ansicht eine Ausführungsform eines Grundkörpers 5 mit daran befestigten Ausströmeinheiten 7 schematisch dargestellt, wobei der Grundkörper 5 in der Figur 5 mit einem zusätzlichen im Aufnahmeraum AR angeordneten Abdeckschirm 11 gezeigt ist. Der in Form eines Zylinders ausgebildete Grundkörper 5 weist einen kreisrunden Querschnitt auf und ist oberseitig, nämlich an seinem dem Bodenabschnitt 5.1 abgewandten und für die Befestigung an der Abdeckung 6 bzw. dem Streuteller vorgesehenen Ende offen ausgebildet. Im Zentrum des Bodenabschnittes 5.1 ist die Einlassöffnung 12 vorgesehen, an der die Zuführeinheit 3 zum Zuführen der Sole zentral angeordnet und in fluiddichter Weise an den Grundkörper 5 angeschlossen ist.

Die Zuführeinheit 3 ist vorzugsweise derart an die Einlassöffnung 12 des Grundkörpers 5 gekoppelt, dass ein koaxial zur Rotationsachse RA angeordnetes Zuführendstück bzw. ein Zuführstutzen 3.1 in fest stehender Weise in den Aufnahmeraum AR hinein ragt, wobei die Einlassöffnung 12 im Bodenabschnitt 5.1 des Grundkörpers 5 und der Zuführstutzen 3.1 derart gekoppelt sind, dass der Grundkörper 5 um den fest stehenden Zuführstutzen 3.1 rotieren kann.

Vom Bodenabschnitt 5.1 aufragend und direkt an den Bodenabschnitt 5.1 anschließend erstreckt sich der Wandungsabschnitt 5.2, der im Wesentlichen eine Mantelfläche des zylinderförmigen Grundkörpers 5 bildet. Im Wandungsabschnitt 5.2 sind beabstandet zueinander mehrere über einen Umfang des Grundkörpers 5 gleichmäßig verteilt angeordnete Auslassöffnungen 13 vorgesehen, von denen jede mit jeweils einer am Grundkörper 5 befestigten Ausströmeinheit 7 zusammenwirkt. Die Ausströmeinheiten 7 sind derart mit dem Grundkörper 5 verbunden, dass eine jeweilige Hauptachse HA einer jeden Ausströmeinheit 7 bezogen auf die Rotationsachse RA radial orientiert ist.

Zum Abdecken bzw. Abschirmen einzelner Auslassöffnungen 13 kann ein einstellbarer, insbesondere steuerbarer Abdeckschirm 11 vorgesehen sein, wie in Figur 5 dargestellt. Der Abdeckschirm 11 umfasst dabei eine schutzschildartige, gekrümmt ausgebildete Schirmfläche 11a, wobei die Schirmfläche 11a in Bezug auf ihre Geometrie an den Wandungsabschnitt 5.2 angepasst ist und insbesondere dazu ausgebildet ist, innenseitig am Wandungsabschnitt 5.2 in anliegenden oder nahezu anliegenden Kontakt mit diesem zu gelangen. Eine Höhe h sowie eine Umfangslänge lu der Schirmfläche 11a ist dabei jeweils mindestens so groß, dass die Schirmfläche 11a wenigstens eine Auslassöffnung 13 im Wandungsabschnitt 5.2 vollständig verdecken oder verschließen bzw. abschirmen kann. Vorzugsweise entspricht die Höhe h der Schirmfläche 11a mindestens einer halben Höhe des Wandungsabschnittes 5.2 des Grundkörpers 5, besonders bevorzugt beträgt die Höhe h der Schirmfläche 11a mindestens zwei Drittel oder mindestens drei Viertel der Höhe des Wandungsabschnittes 5.2. Die Umfangslänge lu der Schirmfläche 11a ist vorzugsweise so gewählt, dass über den Abdeckschirm 11 gleichzeitig mindestens zwei oder mindestens drei Auslassöffnung 13 im Wandungsabschnitt 5.2 vollständig verdeckt oder verschlossen bzw. abgeschirmt werden können.

Der Abdeckschirm 11 ist mittels Streben 11b an dem Zuführstutzen 3.1 festgelegt und rotiert daher nicht mit dem Grundkörper 5 mit, sondern ruht vielmehr in einer vorher eingestellten, fest stehenden Position selbst bei Rotation des Grundkörpers 5 um die Rotationsachse RA. Die Streben 11b können federnd gegen den Zuführstutzen 3.1 gelagert sein, so dass die Schirmfläche 11a mit einer vorgegebenen Kraft gegen eine Innenseite des Wandungsabschnittes 5.2 gedrückt wird, wobei lediglich zu berücksichtigen ist, dass der Wandungsabschnitt 5.2 und die Schirmfläche 11a ungehindert aneinander gleiten können.

Da der Abdeckschirm 11 unabhängig von der Rotation des Grundkörpers 5 ortsfest angeordnet ist, wird/werden in Abhängigkeit von der Drehung bzw. Rotation des Grundkörpers jeweils alternierende Auslassöffnung(en) 13 abgedeckt, wobei darunter zu verstehen ist, dass jeweils die an der entsprechenden Umlaufstellung oder Drehposition "vorbeilaufende(n)" Auslassöffnung(en) 13 abgedeckt werden.

Der Abdeckschirm 11 ist verstellbar, insbesondere steuerbar ausgebildet, und zwar derart, dass eine Position der Schirmfläche 11a veränderbar bzw. einstellbar ist. Durch entsprechende Positionierung bzw. Einstellung des Abdeckschirmes 11 kann das Streubild für das auszubringende bzw. ausgebrachte Streumittel variiert werden. Insbesondere bevorzugt ist der Abdeckschirm 11 dabei so angeordnet, dass er in Fahrtrichtung FR des Winterdienstfahrzeuges 100 (vgl. Figuren 1a, 1b) vor der Rotationsachse RA der Ausbringeinrichtung 4 angeordnet ist und damit einem Fahrzeugheck zugewandt ist. Auf diese Weise wird das Streubild so eingestellt, dass trotz der gleichmäßigen Verteilung bzw. Anordnung der Ausströmeinheiten 7 um den gesamten Umfang des zylinderförmigen Grundkörpers 5 in Richtung des Fahrzeughecks kein Streumittel ausgeworfen wird. Beispielsweise entspricht das Streubild dabei im Wesentlichen einem Streukreis, bei dem ein Bereich ähnlich einem Kreissektor ausgespart ist, in dem keine Ausbringung von Streumittel erfolgt, wobei dieser ausgesparte Kreissektorbereich dem Winterdienstfahrzeug 100 zugewandt ist.

Bevorzugt kann die Einstellung oder Verstellung des Abdeckschirmes 11 über eine nicht in den Figuren dargestellte Steuerung erfolgen. In einer Ausführungsvariante gemäß Figur 3, bei der der Grundkörper unterseitig am Streuteller 6 befestigt ist, kann der Abdeckschirm 11 beispielsweise über eine Tellersteuerung verstellt werden.

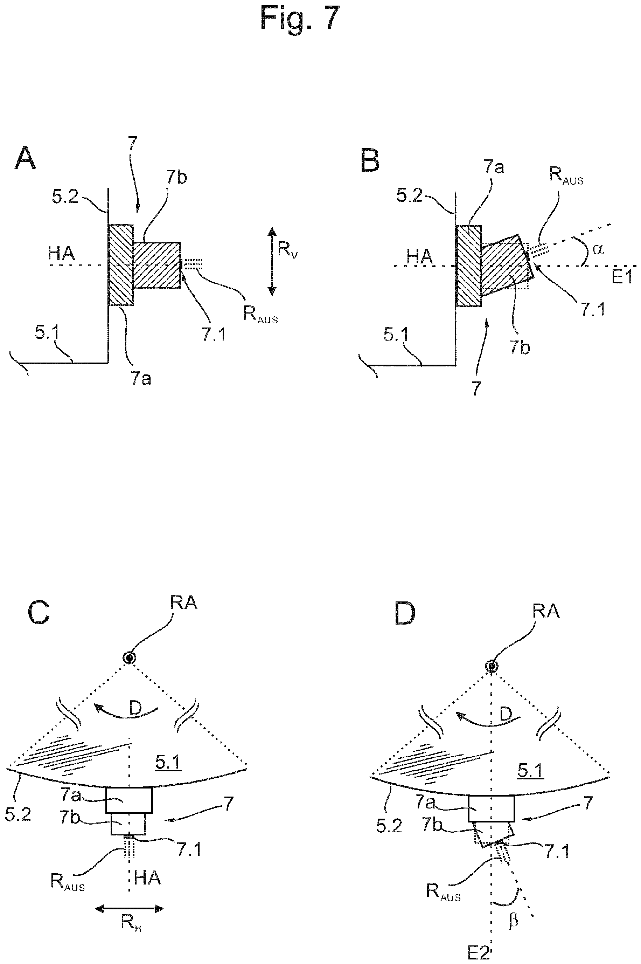

In den Figuren 6 und 7 ist die variable Verstellbarkeit der Ausströmeinheiten 7 gemäß einer bevorzugten Ausführungsvariante veranschaulicht. Eine derartige beispielhafte, bevorzugte Ausführungsvariante einer verstellbaren Ausströmeinheit 7 ist in Figur 6 in einer Explosionsdarstellung gezeigt. Die dargestellte Ausströmeinheit 7 ist mehrteilig ausgebildet und umfasst ein zur Befestigung an dem Wandungsabschnitt 5.2 des Grundkörpers 5 ausgebildetes Basisstück 7a mit einem ferner vorgesehenen hülsenartigen Befestigungsring 7a' sowie ein gelenkig mit dem Basisstück 7a verbundenes Kopfstück 7b, welches einen Gelenkkugelabschnitt 9 sowie die Ausströmmündung 7.1 aufweist. Im verbundenen Zustand bzw. in Gebrauchsstellung ist das Kopfstück 7b mit seinem Gelenkkugelabschnitt 9 derart in dem eine Gelenkpfanne bildenden Basisstück 7a aufgenommen, dass die Ausströmmündung 7.1 dem Kopfstück 7b abgewandt ist und ein freies Ende der Ausströmeinheit 7 bildet. Durch den in dem Basisstück 7a aufgenommenen Gelenkkugelabschnitt 9 des Kopfstückes 7b wird eine Kugelgelenkverbindung gebildet, die eine Verstellung in beliebige Richtungen erlaubt, wie mehr im Detail aus der Figur 7 hervorgeht.

In einer Grundstellung der Ausströmeinheit 7 ist das mit seinem Gelenkkugelabschnitt 9 in dem Basisstück 7a aufgenommene Kopfstück 7b so ausgerichtet, dass die Ausströmmündung 7.1 ebenfalls entlang der Hauptachse HA angeordnet ist und damit eine Ausströmrichtung R_{AUS} des austretenden Streumittels in Richtung der Hauptachse HA orientiert ist. Eine derartige Grundstellung ist in der Figur 7 in den Teilen A und C wiedergegeben, wobei Figur 7A die Ausströmeinheit 7 in einem Vertikalschnitt in Richtung der Rotationsachse RA zeigt und Figur 7C einen Ausschnitt des Grundkörpers 5 in einer Draufsicht von oben wiedergibt.

Aufgrund der kugelgelenkartigen Verbindung des Kopfstückes 7b mit dem Basisstück 7a kann das Kopfstück 7b der Ausströmeinheit 7 sowohl in einer vertikalen Richtung R_{V} als auch in einer horizontalen Richtung R_{H} ausgelenkt werden. Figuren 7B und D geben jeweils eine entsprechende Auslenkposition wieder. Wie in Figur 7B dargestellt ist, wird die Ausströmmündung 7.1 bei einer bevorzugten Auslenkung des Kopfstückes 7b in vertikaler Richtung R_{V} nach oben derart verschwenkt, dass die Ausströmrichtung R_{AUS} des austretenden Streumittels mit einer horizontalen, parallel zum Bodenabschnitt 5.1 des Grundkörpers 5 verlaufenden und die Hauptachse HA der Ausströmeinheit 7 aufnehmenden Ebene E1 einen Winkel α einschließt. Bei einer bevorzugten Auslenkung des Kopfstückes 7b in horizontaler Richtung R_{H} wird die Ausströmmündung 7.1 derart verschwenkt, dass die Ausströmrichtung R_{AUS} des austretenden Streumittels mit einer vertikalen, die Rotationsachse RA aufnehmenden Ebene E2 einen Winkel β einschließt, wie in Figur 7D dargestellt.

Durch entsprechende Verstellung der Ausströmeinheiten 7 kann besonders vorteilhaft eine bedarfsgerechte Einstellung des Streubildes erzielt und gleichzeitig die Wurfweite für das Streumittel angepasst, insbesondere erhöht werden. Um eine insbesondere große Wurfweite zu erreichen, werden die Ausströmeinheiten 7 ausgehend von der Grundstellung besonders bevorzugt in vertikaler Richtung R_{V} nach oben ausgelenkt und in horizontaler Richtung R_{H} entgegen die Drehrichtung D der Ausbringeinrichtung 4 ausgelenkt. Die Ausströmmündungen 7.1 weisen in dieser bevorzugten Stellung nach oben, wie in Figur 7B gezeigt und zugleich entgegen die Drehrichtung D, wie in Figur 7D gezeigt. Dadurch entsteht eine im Wesentlichen sichelförmige Strahlenform des aus den Ausströmmündungen 7.1 austretenden Strahls des Streumittels, wodurch das Streubild auf eine Idealform einstellbar ist und die Wurfweite deutlich erhöht werden kann.

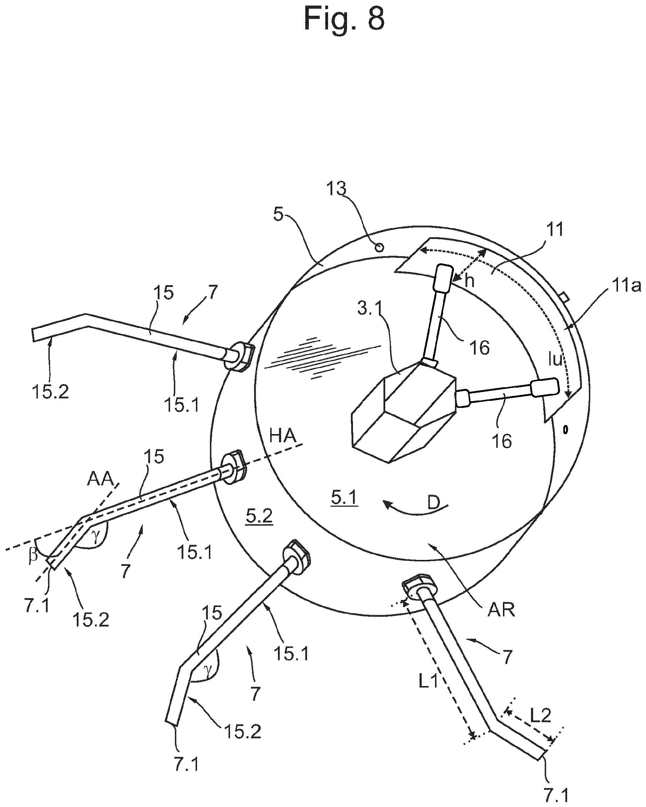

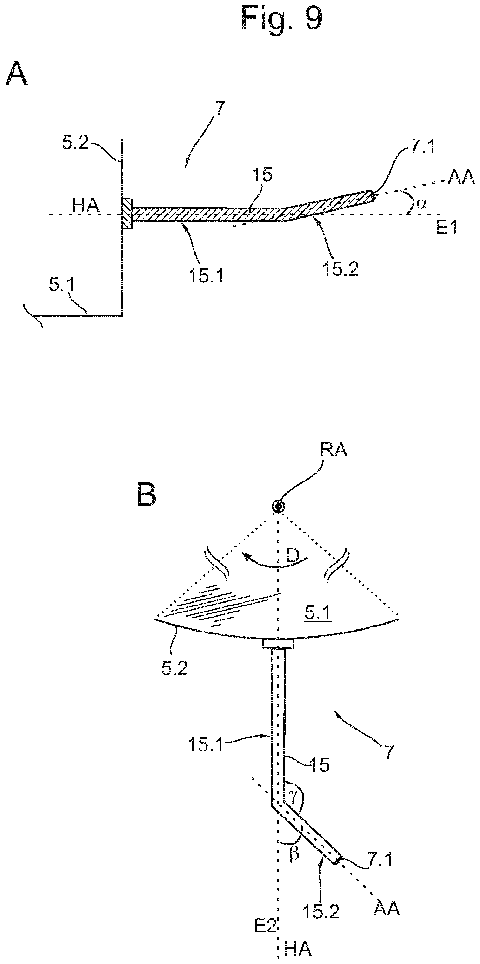

Die Figuren 8 und 9 zeigen eine alternative, ebenso bevorzugte Ausführungsform eines Grundkörpers 5 mit daran befestigten Ausströmeinheiten 7, wobei Figur 8 eine perspektivische Ansicht zeigt und die Figuren 9A und 9B mehr im Detail die Ausströmeinheiten 7 der bevorzugten Ausführungsform wiedergeben. Dabei zeigt Figur 9A die an dem Wandungsabschnitt 5.2 des Grundkörpers 5 befestigte Ausströmeinheit 7 in einem in Richtung der Rotationsachse RA verlaufenden Vertikalschnitt und Figur 9B ausschnittsweise eine Draufsicht von oben.

Der zylindrische Grundkörper 5 der alternativen Ausführungsform entspricht in Bezug auf seinen Aufbau und seine Konfiguration im Wesentlichen denjenigen der Ausführungsformen gemäß Figuren 4 und 5, wobei in Figur 8 lediglich beispielhaft eine entsprechende Konfiguration des Grundkörpers 5 mit Abdeckschirm 11 dargestellt ist. Es versteht sich von selbst, dass der Grundkörper 5 auch ohne Abdeckschirm 11 ausgeführt sein kann.

Die Ausführungsform der Figur 8 unterscheidet sich von derjenigen der Figuren 4 und 5 in erster Linie durch die alternativ ausgebildeten Ausströmeinheiten 7, von denen in Figur 8 aus Gründen der Übersichtlichkeit lediglich vier dargestellt sind. Bei der beispielhaften Ausführungsvariante gemäß Figur 8 sind selbstverständlich jedoch mehrere Ausströmeinheiten 7 über den gesamten Umfang des Grundkörpers 5 verteilt angeordnet, wobei das dargestellte Beispiel zwölf gleichmäßig über den Umfang des Grundkörpers 5 verteilt angeordnete Ausströmeinheiten 7 aufweist. In alternativen Ausführungsformen können auch zehn oder acht Ausströmeinheiten 7 an dem Grundkörper 5 befestigt sein.

Bei der bevorzugten Ausführungsform gemäß Figuren 8 und 9A, 9B umfassen die Aussströmeinheiten 7 ein als Ausbringrohr ausgebildetes Rohrstück 15. Das Rohrstück 15 ist im vorliegenden Beispiel durch ein Winkelrohr gebildet und weist einen ersten Rohrabschnitt 15.1 und zweiten Rohrabschnitt 15.2 auf. Der sich entlang der Hauptachse HA erstreckende erste Rohrabschnitt 15.1 ist mit dem Wandungsabschnitt 5.2 des Grundkörpers 5 verbunden und der gewinkelt an den ersten Rohrabschnitt 15.1 anschließende und sich entlang einer Ausströmachse AA erstreckende zweite Rohrabschnitt 15.2 weist an seinem freien Ende die Ausströmmündung 7.1 auf.

Das aus Edelstahl gefertigte, gewinkelte Rohrstück 15 kann somit als Verlängerung der Ausströmeinheiten 7 angesehen werden, durch die die Ausströmmündungen 7.1 eine vorgegebene Distanz zum Wandungsabschnitt 5.2 des Grundkörpers 5 aufweisen. Die Ausströmmündungen 7.1 sind dabei auf einem den Wandungsabschnitt 5.2 des Grundkörpers 5 konzentrisch umlaufenden Kreis angeordnet, welcher einen im Vergleich zum Grundkörperradius r_{G} (siehe Figur 3) größeren Radius aufweist.

Beispielsweise weist der erste Rohrabschnitt 15.1 eine erste Länge L1 auf, die etwa dem 1,3-Fachen des Grundkörperradius r_{G} entspricht und somit bei ca. zwei Drittel des Durchmessers des Grundkörpers 5 liegt und beispielsweise rund 150 mm beträgt. Der zweite Rohrabschnitt 15.2 weist eine zweite Länge L2 auf, welche beispielsweise etwa 40% bis 50% der ersten Länge L1 entspricht und zum Beispiel 60 mm beträgt. Der erste und zweite Rohrabschnitt 15.1, 15.2 sind derart gegeneinander angestellt, dass sie einen vorgegebenen Winkel γ einschließen, welcher in dem dargestellten Beispiel rund 135° beträgt. Ein Außendurchmesser des Rohrstücks 15 liegt beispielsweise in einem Bereich von 16 mm bis 20 mm und beträgt vorzugsweise rund 18 mm. Bei einer Wandstärke des Materials von rund 1 mm bis 2 mm liegt ein Innendurchmesser daher in einem Bereich von 12 mm bis 16 mm und beträgt vorzugsweise rund 14 mm.

Im dargestellten Beispiel der Figuren 8 und 9A, 9B ist das Rohrstück 15 derart an dem Wandungsabschnitt 5.2 des Grundkörpers 5 befestigt, dass der erste Rohrabschnitt 15.1 im Wesentlichen in radialer Orientierung von dem Wandungsabschnitt 5.2 wegsteht und der zweite Rohrabschnitt 15.2 eine von der radialen Orientierung abweichende Orientierung aufweist. Wie aus Figur 9B hervorgeht, weist die Ausströmmündung 7.1 dabei in eine der Drehrichtung D entgegengesetzte Richtung, wobei die Ausströmachse AA mit einer vertikalen, die Rotationsachse RA aufnehmenden Ebene E2 einen Winkel β einschließt, welcher im vorliegenden Beispiel rund 45° beträgt.

Das Rohrstück 15 kann um die Hauptachse HA gedreht und an entsprechend gewünschter Position festgestellt werden, so dass auch bei dieser bevorzugten Ausführungsform eine variable Verstellung der Ausströmeinheiten 7 möglich ist. Vorzugsweise wird das Rohrstück 15 dabei zur optimalen Einstellung der Wurfweite sowie des Streubilds so eingestellt, dass die Ausströmmündung 7.1 leicht nach oben weist, wie aus Figur 9A hervorgeht. Die Ausströmachse AA schließt dabei mit einer horizontalen, parallel zum Bodenabschnitt 5.1 des Grundkörpers 5 verlaufenden und die Hauptachse HA der Ausströmeinheit 7 aufnehmenden Ebene E1 einen Winkel α ein.

Die Ausströmmündungen 7.1 weisen in dieser bevorzugten Stellung entgegen die Drehrichtung D und zugleich nach oben. Dadurch entsteht eine im Wesentlichen sichelförmige Strahlenform des aus den Ausströmmündungen 7.1 austretenden Strahls des Streumittels, wodurch das Streubild auf eine Idealform einstellbar ist und die Wurfweite deutlich erhöht werden kann. Dadurch kann besonders vorteilhaft eine große Wurfweite für das Streumittel von rund 12 bis 13 m erzielt werden.

Die Rohrstücke 15 können beispielsweise durch Verschraubung am Grundkörper befestigt sein, wobei für die Verstellung mittels Drehung um die Hauptachse HA die Befestigungsschrauben leicht gelöst und nach erfolgter Drehung der Rohrstücke 15 auf die gewünschte Position wieder festgezogen werden können. Auch kann bei den Ausströmeinheiten 7 gemäß Figuren 8 und 9A, 9B jeweils ein Rohrstück 15 mit einem wie in Figur 6 dargestellten Kopfstück 7a und einem zugeordneten Befestigungsring 7a' zu der Ausströmeinheit 7 zusammengesetzt und so an dem Wandungsabschnitt 5.2 befestigt sein.

Der Abdeckschirm 11 des in Figur 8 dargestellten Beispiels wird alternativ zu dem Beispiel der Figur 5 über zwei Arbeitszylinder 16 gehalten und gegen eine Innenseite des Wandungsabschnittes 5.2 gedrückt. Selbstverständlich können jedoch auch die Streben 11b gemäß Figur 5 bei dem Beispiel der Figur 8 Verwendung finden und vice versa die Arbeitszylinder 16 gemäß Figur 8 bei dem Beispiel der Figur 5.

### Bezugszeichenliste

- 1: Streuvorrichtung
- 2, 2': Tank
- 3: Zuführeinheit
- 3.1: Zuführstutzen
- 3a: Zuführleitung
- 4: Ausbringeinrichtung
- 5: Grundkörper
- 5.1: Bodenabschnitt
- 5.2: Wandungsabschnitt
- 6: Abdeckung
- 6a: obere Seite des Streutellers
- 6b: untere Seite des Streutellers
- 7: Ausströmeinheiten
- 7.1: Ausströmmündung
- 7a: Basisstück
- 7a': Befestigungsring
- 7b: Kopfstück
- 8: Führungswandungen
- 9: Gelenkkugelabschnitt
- 10: Vorratsbehälter
- 11: Abdeckschirm
- 11a: Schirmfläche
- 11b: Streben
- 12: Einlassöffnung
- 13: Auslassöffnungen
- 14: Prallhaube
- 15: Rohrstück
- 15.1: erster Rohrabschnitt
- 15.2: zweiter Rohrabschnitt
- 16: Arbeitszylinder
- 100: Winterdienstfahrzeug
- 101: Schneepflug

- AA: Ausströmachse
- AR: Aufnahmeraum
- D: Drehrichtung
- E1: horizontale Ebene
- E2: vertikale Ebene
- FR: Fahrtrichtung
- h: Höhe der Schirmfläche
- HA: Hauptachse
- L1: erste Länge
- L2: zweite Länge
- lu: Umfangslänge der Schirmfläche
- O: Oberseite
- RA: Rotationsachse
- R_{AUS}: Ausströmrichtung
- R_{H}: horizontale Richtung
- r_{G}: Grundkörperradius
- r_{T}: Tellerradius
- R_{V}: vertikale Richtung
- U: Unterseite
- α, β: Winkel
- γ: Winkel

## Patentansprüche

1. Ausbringeinrichtung (4) für eine Streuvorrichtung (1) eines Streufahrzeuges (100) zum Ausbringen von Streumitteln, aufweisend wenigstens einen Grundkörper (5) und eine fest mit dem Grundkörper (5) verbundene Abdeckung (6), wobei der Grundkörper (5) einen Aufnahmeraum (AR) für zugeführtes flüssiges Streumittel definiert und im Wesentlichen in Form eines Zylinders ausgebildet ist, wobei der Grundkörper (5) wenigstens einen eine Unterseite (U) der Ausbringeinrichtung (4) bildenden Bodenabschnitt (5.1) mit einer Einlassöffnung (12) sowie zumindest einen von dem Bodenabschnitt (5.1) aufragenden und eine Rotationsachse (RA) konzentrisch umlaufenden Wandungsabschnitt (5.2) aufweist, wobei die rotierend antreibbare Ausbringeinrichtung (4) zur Abgabe des flüssigen Streumittels aus dem Aufnahmeraum (AR) mehrere Ausströmeinheiten (7) mit jeweils einer Ausströmmündung (7.1) aufweist, wobei die Ausströmeinheiten (7) im Bereich des Wandungsabschnittes (5.2) des Grundkörpers (5) angeordnet sind und mit im Wandungsabschnitt (5.2) vorgesehenen Auslassöffnungen (13) zusammenwirken, wobei die Ausbringeinrichtung (4) derart eingerichtet ist, dass das flüssige Streumittel aufgrund einer bei Rotation um die Rotationsachse (RA) auftretenden Zentrifugalkraft durch die Ausströmeinheiten (7) strahlartig aus dem Aufnahmeraum (AR) nach außen abgegeben wird und dass die Ausströmeinheiten (7) variabel verstellbar ausgebildet sind, derart dass eine Richtung des Strahls des austretenden flüssigen Streumittels an der Ausströmmündung (7.1) eingestellt werden kann

2. Ausbringeinrichtung (4) nach Anspruch 1, **dadurch gekennzeichnet, dass** die variabel verstellbaren Ausströmeinheiten (7) voneinander beabstandet und gleichmäßig über einen Umfang des Wandungsabschnittes (5.2) verteilt sind.

3. Ausbringeinrichtung (4) nach Anspruch 1 oder 2, **dadurch gekennzeichnet, dass** jede Ausströmeinheit (7) wenigstens in einer vertikalen Richtung (R_{V}) verstellbar ist, derart, dass ein die Ausströmmündung (7.1) tragendes freies Ende der Ausströmeinheit (7) in vertikaler Richtung (R_{V}) ausgelenkt werden kann.

4. Ausbringeinrichtung (4) nach einem der Ansprüche 1 bis 3, **dadurch gekennzeichnet, dass** jede Ausströmeinheit (7) wenigstens in einer horizontalen Richtung (R_{H}) verstellbar ist, derart, dass das die Ausströmmündung (7.1) tragende freie Ende der Ausströmeinheit (7) in horizontaler Richtung (R_{H}) ausgelenkt werden kann.

5. Ausbringeinrichtung (4) nach einem der vorhergehenden Ansprüche, **dadurch gekennzeichnet, dass** jede Ausströmeinheit (7) zur variablen Verstellung um eine jeweilige Hauptachse (HA) drehbar ist und/oder dass jede Ausströmeinheit (7) mehrteilig ausgebildet ist und wenigstens ein zur Befestigung an dem Wandungsabschnitt (5.2) des Grundkörpers (5) ausgebildetes Basisstück (7a) sowie ein gelenkig mit dem Basisstück (7a) verbundenes und die Ausströmmündung (7.1) aufweisendes Kopfstück (7b) umfasst.

6. Ausbringeinrichtung (4) nach Anspruch 5, **dadurch gekennzeichnet, dass** das Kopfstück (7b) einen Gelenkkugelabschnitt (9) aufweist und das Basisstück (7a) eine gelenkpfannenartige Aufnahme für den Gelenkkugelabschnitt (9) bildet.

7. Ausbringeinrichtung (4) nach einem der vorhergehenden Ansprüche, **dadurch gekennzeichnet, dass** die Ausströmeinheiten (7) derart an dem Wandungsabschnitt (5.2) des Grundkörpers (5) befestigt sind, dass die jeweilige Hauptachse (HA) in Bezug auf die Rotationsachse (RA) in einer radialen Orientierung angeordnet ist.

8. Ausbringeinrichtung (4) nach Anspruch 7, **dadurch gekennzeichnet, dass** die Ausströmeinheiten (7) Rohrstücke (15) oder Rohrstückabschnitte aufweisen und dadurch in Richtung der Hauptachse (HA) derart verlängert sind, dass die Ausströmmündungen (7.1) eine vorgegebene Distanz zu einer äußeren Oberfläche des Wandungsabschnittes (5.2) des Grundkörpers (5) aufweisen.

9. Ausbringeinrichtung (4) nach Anspruch 8, **dadurch gekennzeichnet, dass** jede Ausströmeinheit (7) ein als Winkelrohr ausgebildetes Rohrstück (15) mit einem ersten Rohrabschnitt (15.1) und einem zweiten Rohrabschnitt (15.2) umfasst, wobei sich der erste Rohrabschnitt (15.1) entlang der Hauptachse (HA) und der zweite Rohrabschnitt (15.2) entlang einer Ausströmachse (AA) erstreckt.

10. Ausbringeinrichtung (4) nach Anspruch 9, **dadurch gekennzeichnet, dass** der erste und der zweite Rohrabschnitt (15.1, 15.2) einen vorgegebenen Winkel (γ) in einem Bereich von 115° bis 160°, vorzugsweise in einem Bereich von 125° bis 150° und besonders bevorzugt von rund 135° einschließen.

11. Ausbringeinrichtung (4) nach einem der vorhergehenden Ansprüche, **dadurch gekennzeichnet, dass** zusätzlich ein in dem Aufnahmeraum (AR) angeordneter Abdeckschirm (11) vorgesehen ist, wobei der Abdeckschirm (11) zur innenseitigen Abschirmung wenigstens einer der Auslassöffnungen (13) im Wandungsabschnitt (5.2) ausgebildet ist.

12. Ausbringeinrichtung (4) nach Anspruch 11, **dadurch gekennzeichnet, dass** der Abdeckschirm (11) eine gekrümmt ausgebildete Schirmfläche (11a) umfasst, wobei eine Höhe (h) der Schirmfläche (11a) und eine Umfangslänge (lu) der Schirmfläche (11a) so gewählt sind, dass die Schirmfläche (11a) an den Wandungsabschnitt (5.2) angepasst ist und mindestens eine Auslassöffnung (13) vollständig verdeckt und/oder dass der Abdeckschirm (11) in einer vorgegebenen Position fest stehend in dem Aufnahmeraum (AR) angeordnet und befestigt ist und/oder dass zumindest ein beweglicher Arbeitszylinder vorgesehen ist, der die Schirmfläche (11a) des Abdeckschirms (11) gegen eine Innenseite des Wandungsabschnitts (5.2) drückt, wobei die Position des Abdeckschirmes (11) vorzugsweise gesteuert einstellbar ist.

13. Streuvorrichtung (1) für Streufahrzeuge (100) zum Ausbringen von Streumitteln, umfassend zumindest einen Tank (2, 2') zur Aufnahme von auszustreuenden flüssigen Streumitteln und wenigstens eine über eine vorgesehene Zuführeinheit (3) mit dem Tank (2, 2') verbundene rotierend angetriebene Ausbringeinrichtung (4) nach Anspruch 1.

14. Streuvorrichtung (1) nach Anspruch 13, **dadurch gekennzeichnet, dass** ferner ein Vorratsbehälter (10) zur Aufnahme von auszustreuenden festen Streumitteln und wenigstens eine Förder- und Beschickungseinheit zum Aufbringen der festen Streumittel auf eine Oberseite (O) der Ausbringeinrichtung (4) aufweist, wobei die Streuvorrichtung (1) zum gleichzeitigen Ausbringen von flüssigen und festen Streumitteln ausgebildet ist, wobei die Abdeckung (6) der Ausbringeinrichtung (4) für die gleichzeitige Ausbringung von flüssigen und festen Streumitteln in Form eines Streutellers ausgebildet ist, wobei die als Streuteller ausgebildete Abdeckung (6) vorzugsweise einen Tellerradius (r_{T}) aufweist, der größer ist als ein Grundkörperradius (r_{G}) des Grundkörpers (5) und/oder wobei an einer dem Grundkörper (5) abgewandten oberen Seite (6a) des Streutellers vorzugsweise nach oben aufragende Führungswandungen (8) vorgesehen sind.

15. Streuvorrichtung (1) nach Anspruch 13 oder 14, **dadurch gekennzeichnet, dass** zwei oder mehrere Ausbringeinrichtungen (4) vorgesehen sind, wobei die zwei oder mehreren Ausbringeinrichtungen (4) nebeneinander und/oder übereinander angeordnet sind.

## Claims

1. Dispensing device (4) for a spreading device (1) of a spreading vehicle (100) for dispensing spreading agents, having at least one base body (5) and a cover (6) fixedly connected to the base body (5), wherein the base body (5) defines a receiving space (AR) for supplied liquid spreading agent and is substantially designed in a cylindrical shape, wherein the base body (5) comprises at least one bottom section (5.1) forming an underside (U) of the dispensing device (4) with an inlet opening (12), and also at least one wall section (5.2) projecting from the bottom section (5.1) and concentrically surrounding an axis of rotation (RA), wherein the dispensing device (4), which can be driven to rotate, comprises multiple discharge units (7) each with an discharge opening (7.1) for dispensing the liquid spreading agents out of the receiving space (AR), wherein the discharge units (7) are arranged in the area of the wall section (5.2) of the base body (5) and correspond with outlet openings (13) provided in the wall section (5.2), wherein the dispensing device (4) is equipped in such a way that, due to a centrifugal force arising during rotation about the axis of rotation (RA), the liquid spreading agent is dispensed outwardly in a stream from the receiving space (AR) through the discharge units (7), and that the discharge units (7) are designed to be variably adjustable in such a way that a direction of the stream of the dispensing liquid spreading agents at the discharge opening (7.1) can be adjusted.

2. Dispensing device (4) according to claim 1, **characterized in that** the variably adjustable discharge units (7) are spaced apart from one another and are uniformly distributed across a circumference of the wall section (5.2).

3. Dispensing device (4) according to claim 1 or 2, **characterized in that** each discharge unit (7) is adjustable at least in a vertical direction (R_{V}) in such a way that a free end of the discharge unit (7) supporting the discharge opening (7.1) can be deflected in the vertical direction (R_{V}).

4. Dispensing device (4) according to one of claims 1 to 3, **characterized in that** each discharge unit (7) is adjustable at least in a horizontal direction (R_{H}) in such a way that a free end of the discharge unit (7) supporting the discharge opening (7.1) can be deflected in the horizontal direction (R_{H}).

5. Dispensing device (4) according to one of the preceding claims, **characterized in that** each discharge unit (7) is rotatable about a respective main axis (HA) for variable adjustment and/or that each discharge unit (7) is designed in several parts and comprises at least one base piece (7a) designed for attaching to the wall section (5.2) of the base body (5) and a head piece (7b) articulatedly connected to the base piece (7a) and comprising the discharge opening (7.1).

6. Dispensing device (4) according to claim 5, **characterized in that** the head piece (7b) comprises a ball joint portion (9) and the base piece (7a) forms a joint socket type receptacle for the ball joint portion (9).

7. Dispensing device (4) according to one of the preceding claims, **characterized in that** the discharge units (7) are fastened to the wall section (5.2) of the base body (5) in such a way that the respective main axis (HA) is arranged in a radial orientation with respect to the axis of rotation (RA).

8. Dispensing device (4) according to claim 7, **characterized in that** the discharge units (7) comprise pipe pieces (15) or pipe piece sections and are thus extended in the direction of the main axis in such a way that the discharge openings (7.1) have a predefined distance to an outer surface of the wall section (5.2) of the base body (5).

9. Dispensing device (4) according to claim 8, **characterized in that** each discharge unit (7) comprises a pipe piece (15) designed as an angled pipe having a first pipe section (15.1) and a second pipe section (15.2), wherein the first pipe section (15.1) extends along the main axis (HA) and the second pipe section (15.2) extends along a discharge axis (AA).

10. Dispensing device (4) according to claim 9, **characterized in that** the first and second pipe sections (15.1, 15.2) define a predetermined angle (γ) in a range from 115° to 160°, preferably in a range from 125° to 150°, and particularly preferably of approximately 135°.

11. Dispensing device (4) according to one of the preceding claims, **characterized in that** a cover shield (11) is additionally provided, arranged in the receiving space (AR), wherein the cover shield (11) is designed for inner-side shielding of at least one of the outlet openings (13) in the wall section (5.2).

12. Dispensing device (4) according to claim 11, **characterized in that** the cover shield (11) comprises a curved shield surface (11a) , wherein a height (h) of the shield surface (11a) and a circumferential length (lu) of the shield surface (11a) are selected such that the shield surface (11a) is adapted to the wall section (5.2) and completely covers at least one outlet opening (13), and/or that the cover shield (11) is arranged and fastened in a predefined position, fixed upright in the receiving space (AR), and/or that at least one movable working cylinder is provided which presses the shield surface (11a) of the cover shield (11) against an inner side of the wall section (5.2), wherein the position of the cover shield (11) is preferably adjustably controlled.

13. Spreading device (1) for spreading vehicles (100) for dispensing spreading agents, comprising at least one tank (2, 2') for receiving liquid spreading agents to be spread, and at least one rotatably driven dispensing device (4) according to claim 1, connected to the tank (2, 2') via a provided feed unit (3).

14. Spreading device (1) according to claim 13, **characterized in that** it additionally has a storage container (10) for receiving solid spreading agents to be scattered and at least one conveying and feed unit for depositing the solid spreading agents onto an upper side (O) of the dispensing device (4), wherein the spreading device (1) is designed for simultaneous dispensing of liquid and solid spreading agents, wherein the cover (6) of the dispensing device (4) is designed as a spreading plate for the simultaneous dispensing of liquid and solid spreading agents, wherein the cover (6) designed as a spreading plate preferably has a plate radius (r_{T}) which is greater than a base body radius (r_{G}) of the base body (5) and/or wherein preferably upwardly projecting guide walls (8) are provided on an upper side (6a) of the spreading plate facing away from the base body (5).

15. Spreading device (1) according to claim 13 or 14, **characterized in that** two or more dispensing devices (4) are provided, wherein the two or more dispensing devices (4) are arranged next to one another and/or one above the other.

## Revendications

1. Dispositif de distribution (4) pour un dispositif d'épandage (1) d'un véhicule d'épandage (100) pour épandre des produits d'épandage, comportant au moins un corps de base (5) et un élément de couverture (6) relié fermement au corps de base (5), sachant que le corps de base (5) définit un espace de logement (AR) pour le produit d'épandage liquide acheminé et est constitué pour l'essentiel sous la forme d'un cylindre, sachant que le corps de base (5) comporte au moins une section de fond (5.1) formant une face inférieure (U) du système de distribution (4) avec une ouverture d'entrée (12) et au moins une section de paroi (5.2) dépassant de la section de fond (5.1) et entourant de façon concentrique un axe de rotation (RA), sachant que le dispositif de distribution (4) pouvant être entraîné en rotation comporte plusieurs unités d'éjection (7) avec respectivement une embouchure d'éjection (7.1) pour délivrer le produit d'épandage liquide à partir de l'espace de logement (AR), sachant que les unités d'éjection (7) sont disposées dans la zone de la section de paroi (5.2) du corps de base (5) et coopèrent avec des ouvertures de sortie (13) prévues dans la section de paroi (5.2), sachant que le dispositif de distribution (4) est agencé de telle sorte que le produit d'épandage liquide est délivré vers l'extérieur sous la forme de jets depuis l'espace de logement (AR) à travers les unités d'éjection (7) en raison d'une force centrifuge se produisant lors de la rotation autour de l'axe de rotation (RA) et que les unités d'éjection (7) sont constituées pouvant être réglées de façon variable de telle manière qu'une direction du jet du produit d'épandage liquide sortant à l'embouchure d'éjection (7.1) peut être réglée .

2. Dispositif de distribution (4) selon la revendication 1, **caractérisé en ce que** les unités d'éjection (7) réglables de façon variable sont réparties à distance l'une de l'autre et de façon uniforme sur une périphérie de la section de paroi (5.2).

3. Dispositif de distribution (4) selon la revendication 1 ou 2, **caractérisé en ce que** chaque unité d'éjection (7) peut être réglée au moins dans une direction verticale (R_{V}) de telle manière qu'une extrémité libre portant l'embouchure d'éjection (7.1) de l'unité d'éjection (7) peut être déviée en direction verticale (R_{V}).

4. Dispositif de distribution (4) selon l'une quelconque des revendications 1 à 3, **caractérisé en ce que** chaque unité d'éjection (7) peut être réglée au moins dans une direction horizontale (R_{H}) de telle manière que l'extrémité libre portant l'embouchure d'éjection (7.1) de l'unité d'éjection (7) peut être déviée en direction horizontale (R_{H}).

5. Dispositif de distribution (4) selon l'une quelconque des revendications précédentes, **caractérisé en ce que** chaque unité d'éjection (7) peut être tournée pour le réglage variable autour d'un axe principal respectif (HA) et/ou **en ce que** chaque unité d'éjection (7) est constituée en plusieurs parties et comprend au moins une pièce de base (7a) constituée pour la fixation à la section de paroi (5.2) du corps de base (5) ainsi qu'une pièce de tête (7b) reliée en articulation à la pièce de base (7a) et comportant l'embouchure d'éjection (7.1).

6. Dispositif de distribution (4) selon la revendication 5, **caractérisé en ce que** la pièce de tête (7b) comporte une section de rotule d'articulation (9) et la pièce de base (7a) forme un logement de type coussinet d'articulation pour la section de rotule d'articulation (9).

7. Dispositif de distribution (4) selon l'une quelconque des revendications précédentes, **caractérisé en ce que** les unités d'éjection (7) sont fixées à la section de paroi (5.2) du corps de base (5) de telle manière que l'axe principal respectif (HA) est disposé dans une orientation radiale par rapport à l'axe de rotation (RA).

8. Dispositif de distribution (4) selon la revendication 7, **caractérisé en ce que** les unités d'éjection (7) comportent des éléments tubulaires (15) ou sections tubulaires et sont prolongées de ce fait en direction de l'axe principal (HA) de telle sorte que les embouchures d'éjection (7.1) comportent une distance prédéfinie par rapport à une surface extérieure de la section de paroi (5.2) du corps de base (5).

9. Dispositif de distribution (4) selon la revendication 8, **caractérisé en ce que** chaque unité d'éjection (7) comprend un élément tubulaire (15) constitué sous la forme d'un coude avec une première section tubulaire (15.1) et une deuxième section tubulaire (15.2), sachant que la première section tubulaire (15.1) s'étend le long de l'axe principal (HA) et la deuxième section tubulaire (15.2) le long d'un axe d'éjection (AA).

10. Dispositif de distribution (4) selon la revendication 9, **caractérisé en ce que** la première et la deuxième section tubulaire (15.1, 15.2) forment un angle (γ) prédéfini dans une plage de 115° à 160°, de préférence dans une plage de 125° à 150° et en particulier de préférence d'environ 135°.

11. Dispositif de distribution (4) selon l'une quelconque des revendications précédentes, **caractérisé en ce qu'**un écran de couverture (11) disposé dans l'espace de logement (AR) est prévu en plus, sachant que l'écran de couverture (11) est constitué pour le masquage côté intérieur d'au moins une des ouvertures de sortie (13) dans la section de paroi (5.2).

12. Dispositif de distribution (4) selon la revendication 11, **caractérisé en ce que** l'écran de couverture (11) comprend une surface d'écran (11a) constituée incurvée, sachant qu'une hauteur (h) de la surface d'écran (11a) et une longueur périphérique (lu) de la surface d'écran (11a) sont choisies de telle manière que la surface d'écran (11a) est adaptée à la section de paroi (5.2) et couvre au moins complètement une ouverture de sortie (13) et/ou **en ce que** l'écran de couverture (11) est disposé et fixé de façon stable dans l'espace de logement (AR) dans une position prédéfinie et/ou **en ce qu'**au moins un vérin de travail mobile est prévu qui appuie la surface d'écran (11a) de l'écran de couverture (11) contre une face intérieure de la section de paroi (5.2), sachant que la position de l'écran de couverture (11) peut être réglée de préférence de façon commandée.

13. Dispositif d'épandage (1) pour véhicules d'épandage (100) pour épandre des produits d'épandage, comprenant au moins un réservoir (2, 2') pour loger des produits d'épandage liquides à épandre et au moins un dispositif de distribution (4) entraîné en rotation relié par une unité d'alimentation (3) prévue au réservoir (2, 2') selon la revendication 1.

14. Dispositif d'épandage (1) selon la revendication 13, **caractérisé en ce qu'**il comporte en plus un réservoir de stockage (10) pour recevoir des produits d'épandage solides à épandre et au moins une unité de transport et de chargement pour disposer des produits d'épandage solides sur une face supérieure (O) du dispositif de distribution (4), sachant que le dispositif d'épandage (1) est constitué pour épandre simultanément des produits d'épandage liquides et solides, sachant que l'élément de couverture (6) du dispositif de distribution (4) est constitué pour la distribution simultanée de produits d'épandage liquides et solides sous la forme d'un plateau d'épandage, sachant que l'élément de couverture (6) constituée sous la forme d'un plateau d'épandage comporte de préférence un rayon de plateau (r_{T}), qui est plus grand qu'un rayon de corps de base (r_{G}) du corps de base (5) et/ou sachant que sur une face supérieure (6a) du plateau d'épandage éloignée du corps de base (5) sont prévues des parois de guidage (8) de préférence dressées vers le haut.

15. Dispositif d'épandage (1) selon la revendication 13 ou 14, **caractérisé en ce que** deux ou plusieurs dispositifs de distribution (4) sont prévus, sachant que les deux ou plusieurs dispositifs de distribution (4) sont disposés l'un à côté de l'autre et/ou l'un sur l'autre.
